# EUROPEAN PATENT SPECIFICATION

(11) **EP 4 466 552 B1**
(45) Date of publication and mention of the grant of the patent: **26.08.2026**
(21) Application number: 23738876.4
(22) Date of filing: 15.06.2023
(51) Int. Cl.: G01S 5/02, G01S 11/04

(54) **WIRELESS ANGLE-BASED POSITIONING**
DRAHTLOSE WINKELBASIERTE POSITIONIERUNG
LOCALISATION SANS FIL BASÉE SUR LES ANGLES

(30) Priority: 15.06.2022 US 202263352371 P; 15.06.2022 US 202263352402 P
(43) Date of publication of application: 27.11.2024
(73) Proprietor: Lenovo (Singapore) Pte. Ltd., Singapore 556741 (SG)
(72) Inventor: THOMAS, Robin Rajan, 60489 Frankfurt (DE); FRANK, Colin, Park Ridge, Illinois 60068 (US); GANESAN, Karthikeyan, 61476 Kronberg Im Taunus (DE); BEN HADJ FREDJ, Abir, 65183 Wiesbaden (DE); GOLITSCHEK EDLER VON ELBWART, Alexander, 64285 Darmstadt (DE); ARDAH, Khaled Nafez Rauf, 98693 Ilmenau (DE)
(74) Representative: Openshaw & Co.
(86) International application number: PCT/IB2023/056226
(87) International publication number: WO 2023/242804

(56) References cited:
- WO-A1-2021/185454
- WO-A1-2022/066380
- CN-A- 114 222 931
- US-A1- 2021 048 500

## Description

### RELATED APPLICATIONS

This application claims priority to U.S. Patent Application Serial No. 63/352,371 filed 15 June 2022 entitled "WIRELESS ANGLE-BASED POSITIONING," and U.S. Patent Application Serial No. 63/352,402 filed 15 June 2022 entitled "WIRELESS ANGLE-BASED POSITIONING,".

### TECHNICAL FIELD

The present disclosure relates to wireless communications, and more specifically to position determination in wireless communications.

### BACKGROUND

A wireless communications system may include one or multiple network communication devices, such as base stations, which may be otherwise known as an eNodeB (eNB), a next-generation NodeB (gNB), or other suitable terminology. Each network communication devices, such as a base station may support wireless communications for one or multiple user communication devices, which may be otherwise known as user equipment (UE), or other suitable terminology. The wireless communications system may support wireless communications with one or multiple user communication devices by utilizing resources of the wireless communication system (e.g., time resources (e.g., symbols, slots, subframes, frames, or the like) or frequency resources (e.g., subcarriers, carriers). Additionally, the wireless communications system may support wireless communications across various radio access technologies including third generation (3G) radio access technology, fourth generation (4G) radio access technology, fifth generation (5G) radio access technology, among other suitable radio access technologies beyond 5G (e.g., sixth generation (6G)).

Some wireless communications systems provide ways for device positioning, such as for UE positioning. However, some techniques do not support efficient UE-to-UE range and/or relative direction/orientation determination.

WO2022066380A1 discloses a signal measurement assistance method which includes: obtaining reference signal angle information comprising first indications indicating a first reference signal and a first expected angle of arrival of the first reference signal; and at least one of: requesting a transmission/reception point (TRP) to transmit, to a user equipment, the first indications; or requesting the TRP to search for the first reference signal based on the first expected angle of arrival.

WO2021185454A1 discloses positioning of a target node. A positioning report may comprise positioning assistance measurements from the target node and at least one anchor node, wherein the positioning assistance measurements are associated with angular differences between a pair of uplink and/or downlink transmission and/or reception beam directions.

US2021048500A1 discloses a base station performs one or more angle-based measurements in a first coordinate system, determines whether to report, to a positioning entity, the one or more angle-based measurements in a local coordinate system (LCS) or a global coordinate system (GCS), and reports the one or more angle-based measurements to the positioning entity in the LCS or the GCS based on the determination. In an aspect, a positioning entity receives, from a base station, one or more angle-based measurements in an LCS of the base station or a GCS, determines whether the one or more angle-based measurements are in the LCS or the GCS, and processes the one or more angle-based measurements based on the determination.

CN114222931A discloses a positioning method which comprises: sending a capability request message to a second terminal; wherein the second terminal is a terminal communicating with the first terminal through a sidelink; in response to the received capability providing message returned by the second terminal, sending a positioning auxiliary information request message to the second terminal based on positioning capability information used for indicating the positioning capability supported by the second terminal in the capability providing message; responding to a received positioning auxiliary information providing message which is returned by the second terminal and comprises the first positioning auxiliary information, and sending a request position information message to the second terminal; and determining the position information of the second terminal based on the first positioning auxiliary information and the measurement result in response to receiving a position information providing message which is returned by the second terminal and comprises the measurement result.

### SUMMARY

The invention is defined by the appended independent claims.

The present disclosure relates to methods, apparatuses, and systems that support wireless angle-based positioning. For instance, an angular search window and associated uncertainty for positioning (e.g., sidelink positioning) can be determined based on an approximate position and/or range of a target-UE. Further, reporting of per path measurements is provided to in multipath environments. Implementations are also provided for triggering, configuring, and reporting angle information including angle of arrival (AoA) and/or angle of departure (AoD) (e.g., sidelink AoA and/or sidelink AoD) in terms of a Global Coordinate System (GCS) and a Local Coordinate System (LCS).

By utilizing the described techniques, an overall angular search space over which angles are measured for AoA and/or computed AoD can be reduced. Further, reporting of per path measurements improves the range of an angular search window in multipath environments. The described techniques can thus reduce signaling overhead and device resource usage such as processing and wireless resources. Further, speed and accuracy for device positioning can be increased.

Some implementations of the method and apparatuses described herein may further include receiving, at a UE, one or more positioning reference signals and angle-based configuration information including an expected search angle window based on the approximate location information for the UE; performing AoD mapping based at least in part on one or more positioning reference received signal strength (RSS) measurements and one or more reduced search space AoA measurements based on the angle-based configuration information; generating a position measurement report based at least in part on the AoD mapping and the one or more AoA measurements; and computing a position estimate based at least in part on the AoD mapping and the one or more AoA measurements.

In some implementations of the method and apparatuses described herein, the one or more positioning reference signals include one or more sidelink position reference signals, the angle-based configuration information includes sidelink angle-based configuration information, and the position measurement report includes a sidelink position measurement report; the angle-based configuration information includes uncertainty information for the expected search angle window and antenna location information for an antenna of an apparatus that transmits at least one of the one or more reference signals or the angle-based configuration information; the angle-based configuration information includes signal strength metrics for at least one of one or more azimuth angles or one or more zenith angles for one or more of AoD or AoA; the one or more positioning reference signals include multiple reference signals received over multiple receive paths, further including: performing sidelink AoD mapping of the positioning reference signal RSS measurements for at least some receive paths of the multiple receive paths, and AoA measurements for at least some receive paths of the multiple receive paths; computing the position estimate based at least in part on the AoD mapping of the positioning reference signal RSS measurements and the one or more AoA measurements according to the some receive paths of the multiple receive paths; and generating the position measurement report to indicate the AoA measurements and SL RSS measurements based on the AoD mapping, according to the at least some receive paths of the multiple receive paths.

In some implementations of the method and apparatuses described herein, one or more of a number of receive paths mapped for the AoD or a number of receive paths measured for the AoA measurements is based at least in part of a capability of the UE; one or more of the AoD measurements or the AoA measurements include, for each receive path of the multiple receive paths, at least one of path delay, amplitude response, or a LOS/non-LOS (NLOS) indicator; the position estimate may include one or more of an absolute position, a relative position, or a range including one or more of distance or direction; the RSS measurements may include one or more of a sidelink positioning reference signal (PRS) reference signal received power (RSRP), physical sidelink broadcast channel-RSRP (PSBCH-RSRP), physical sidelink shared channel-RSRP (PSSCH-RSRP), physical sidelink control channel (PSCCH)-RSRP, reference signal (RS)-RSRP, or a received signal strength indicator (RSSI) indicator; the approximate location information for the UE is based on one or more of a previous a sidelink positioning session, E-CID position information, or sidelink E-CID position information;

In some implementations of the method and apparatuses described herein, the approximate location information for the UE is based on one or more of a timing advance procedure to determine link round trip time (RTT), channel measurements, selected beams during initial access procedures, RSS measurements, network-based pathloss measurements, or sidelink-based pathloss measurements; the approximate location information for the UE is based on a subzone identifier to indicate a quadrant of a main zone identifier rectangular grid in which the UE is located relative to an apparatus that transmits at least one of the one or more positioning reference signals or the angle-based configuration information; the expected search angle window is based on one or more of: the approximate location information for the UE; a relative position of the UE; or a range value including one or more of a distance value or a direction value; one or more of the approximate location information for the UE, the relative position of the UE, or the range value is associated with an uncertainty value.

In some implementations of the method and apparatuses described herein, the expected search angle window is configured for one or more of an expected azimuth AoA or an expected zenith AoA; the expected search angle window is configured for one or more of an expected azimuth AoD or an expected zenith AoD; the expected search angle window includes an uncertainty value and a timestamp; the angle-based configuration information includes one or more of a TRP location, a panel location, or an antenna location of a respective TRP, antenna element, or antenna panel that transmits the one or more reference signals and relative to an ARP location, and one or more of the TRP location, the panel location, the antenna location, or the ARP location is associated with a respective uncertainty value; further including transmitting the position measurement report to an apparatus that transmits at least one of the one or more positioning reference signals or the angle-based configuration information; the apparatus that transmits at least one of the one or more positioning reference signals or the angle-based configuration information includes one or more of a second UE, a roadside unit (RSU), an anchor UE, or a sidelink capable device.

Some implementations of the method and apparatuses described herein may further include receiving, at a UE, positioning reference signals and angle-based configuration information over multiple receive paths, the angle-based configuration information including an expected search angle window based on the approximate location information of the UE; performing AoD mapping based at least in part on positioning reference signal RSS measurements and reduced search space AoA measurements based on the angle-based configuration information; generating a position measurement report based at least in part on the AoD mapping of the positioning reference signal RSS measurements and the AoA measurements, where the position measurement report includes a set of positioning reference signal RSS measurements for a first set of receive paths of the multiple receive paths mapped to the AoD of a second UE that transmits one or more of the positioning reference signals or the angle-based configuration information, and a set of AoA measurements for a second set of receive paths of the multiple receive paths; and computing a position estimate based at least in part on the AoD mapping of the positioning reference signal RSS measurements and the one or more AoA measurements according to the at least some receive paths of the multiple receive paths.

In some implementations of the method and apparatuses described herein, the first set of receive paths and the second set of receive paths include one or more common receive paths; one or more of a number of receive paths mapped for the AoD or a number of receive paths measured for the AoA measurements is based at least in part on a capability of the UE; one or more of: the AoD measurements for the first set of receive paths include, for each receive path of the first set of receive paths, at least one of path delay, amplitude response, or a line of sight (LOS)/non-LOS indicator; or the AoA measurements for the second set of receive paths include, for each receive path of the second set of receive paths, at least one of path delay, amplitude response, or a LOS/non-LOS indicator.

Some implementations of the method and apparatuses described herein may further include transmitting, to a target UE, one or more positioning reference signals and angle-based configuration information including an expected search angle window based on the approximate location information of the target UE; and receive, from the target UE, a position measurement report based at least in part on AoD mapping of one or more positioning reference RSS measurements and a reduced search space AoA measurement using the angle-based configuration information.

In some implementations of the method and apparatuses described herein, the angle-based configuration information includes uncertainty information for the expected search angle window and antenna location information for an antenna of the apparatus; the angle-based configuration information includes received signal strength metrics for at least one of: one or more azimuth angles or one or more zenith angles for one or more of AoD or AoA; further including transmitting, to the target UE, a request for position measurements for multiple different receive paths at the target UE; the position measurement report includes AoD measurements for a first set of receive paths, and AoA measurements for a second set of receive paths; the first set of receive paths and the second set of receive paths include one or more common receive paths; one or more of: the AoD measurements for the first set of receive paths include, for each receive path of the first set of receive paths, at least one of path delay, amplitude response, or a LOS/non-LOS indicator; or the AoA measurements for the second set of receive paths include, for each receive path of the second set of receive paths, at least one of path delay, amplitude response, or a LOS/non-LOS indicator.

In some implementations of the method and apparatuses described herein, the approximate location information for the target UE is based on one or more of a previous a sidelink positioning session, E-CID position information, or sidelink E-CID position information; the approximate location information for the target UE is based on one or more of a timing advance procedure to determine link RTT, channel measurements, selected beams during initial access procedures, RSS measurements, network-based pathloss measurements, or sidelink-based pathloss measurements; the approximate location information for the target UE is based on a subzone identifier to indicate a quadrant of a main zone identifier rectangular grid in which the target UE is located with respect to an apparatus that performs the transmitting, to a target UE, the one or more positioning reference signals and the angle-based configuration information.

In some implementations of the method and apparatuses described herein, the expected search angle window is based on one or more of: the approximate location information for the target UE; a relative position of the target UE; or a range value including one or more of a distance value or a direction value; one or more of the approximate location information for the target UE, the relative position of the target UE, or the range value is associated with an uncertainty value; the expected search angle window is configured for one or more of an expected azimuth AoA or an expected zenith AoA; the expected search angle window is configured for one or more of an expected azimuth AoD or an expected zenith AoD; the expected search angle window includes an uncertainty value and a timestamp; the angle-based configuration information includes one or more of a TRP location, a panel location, or an antenna location of a respective TRP, antenna element, or antenna panel that transmits the one or more reference signals and with respect to an ARP location, and one or more of the TRP location, the panel location, the antenna location, or the ARP location is associated with a respective uncertainty value; an apparatus that performs the transmitting, to the target UE, the one or more positioning reference signals and the angle-based configuration information includes at least one of a different UE that supports determining a position of the target UE or a network apparatus that supports determining a position of the target UE; the apparatus includes at least one of a second UE, a RSU, an anchor UE, or a sidelink capable device.

Some implementations of the method and apparatuses described herein may further include receiving, at a UE, one or more positioning reference signals and angle-based configuration information; detecting a trigger event to generate a position measurement report; performing AoD mapping of the one or more positioning reference signals based on LCS information and LCS-to-GCS translation information, and one or more AoA measurements based on the angle-based configuration information; computing a position estimate based at least in part on the AoD mapping and the one or more AoA measurements; and generating the position measurement report based at least in part on one or more of the position estimate, the AoD mapping, or the one or more AoA measurements.

In some implementations of the method and apparatuses described herein, the one or more positioning reference signals include one or more sidelink position reference signals, the angle-based configuration information includes sidelink angle-based configuration information, and the position measurement report includes a sidelink position measurement report; the AoD mapping includes sidelink AoD mapping, and the AoA measurements include sidelink AoA measurements; the received angle-based configuration information includes the LCS information and the LCS-to-GCS translation information; operations further include transmitting the position measurement report to an apparatus that transmits at least one of the one or more positioning reference signals or the angle-based configuration information; to perform the AoD mapping of the one or more positioning reference signals, and operations further include performing distance and direction computation for the UE based on angles calculated in accordance with the GCS; the LCS-to-GCS translation information includes one or more of bearing angle, downtilt angle, or slant angle; operations further include performing the AoA measurements on the angle-based configuration information and based on the GCS; the angle-based configuration information includes sidelink AoD antenna information received from a transmitter device that transmits at least one of the one or more positioning reference signals or the angle-based configuration information.

In some implementations of the method and apparatuses described herein, the trigger event includes one or more of an indication that the LCS information of the UE changes by more than a configured angular threshold, an initiation of a timer, an expiration of a timer, or an area change with respect to a previously reported location of the UE; at least one of the AoD mapping or the AoA measurements include one or more of: at least one azimuth angle or at least one zenith angle; the LCS-to-GCS translation information is preconfigured in the UE; at least one of the one or more positioning reference signals or the angle-based configuration information is received from a transmitter device, and the transmitter device includes at least one of a second UE, a RSU, an anchor UE, or a sidelink capable device; at least one of the angle-based configuration information or the LCS-to-GCS translation information is received via one or more of sidelink control information (SCI), one or more sidelink media access control (MAC) control elements (CE), PC5 radio resource control (RRC) information, PC5 signaling, or via a sidelink positioning protocol (SLPP); further including reporting the LCS information and the LCS-to-GCS translation information according to a configured periodicity; the UE is a member of a group associated with a group local coordinate system (GLCS) defined to be common reference axes for devices that are members of the group, and operations further include: determining a further position estimate of the UE relative to the GLCS; and reporting the further position estimate of the UE relative to the GLCS to one or more other devices that are members of the group.

Some implementations of the method and apparatuses described herein may further include transmitting, to a target UE, one or more positioning reference signals and angle-based configuration information; and receiving, from the target UE, a position measurement report generated based at least in part on AoD mapping of the one or more positioning reference signals based on LCS information and LCS-to-GCS translation information, and one or more AoA measurements based on the angle-based configuration information.

In some implementations of the method and apparatuses described herein, the one or more positioning reference signals include one or more sidelink position reference signals, the angle-based configuration information includes sidelink angle-based configuration information, and the position measurement report includes a sidelink position measurement report; further including transmitting, to the UE, the LCS information and the LCS-to-GCS translation information; the LCS-to-GCS translation information includes one or more of bearing angle, downtilt angle, or slant angle; the angle-based configuration information includes sidelink AoD antenna information for an antenna of an apparatus that performs the transmitting and the receiving; operations further include transmitting, to the target UE, information for a trigger event to generate the position measurement report; the information for the trigger event includes one or more of an indication that the LCS information of the UE changes by more than a configured angular threshold, an initiation of a timer, an expiration of a timer, or an area change with respect to a previously reported location of the UE; at least one of the AoD mapping or the AoA measurements include one or more of: at least one azimuth angle or at least one zenith angle; an apparatus that performs the transmitting and the receiving includes at least one of a second UE, an RSU, an anchor UE, or a sidelink capable device; further including transmitting, to the UE, at least one of the angle-based configuration information or the LCS-to-GCS translation information via one or more of SCI, one or more sidelink MAC CE, PC5 RRC information, PC5 signaling, or via a SLPP; further including generating the LCS-to-GCS translation information; further including transmitting one or more of the LCS information or the LCS-to-GCS translation information according to a configured periodicity.

Some implementations of the method and apparatuses described herein may further include determining an estimated position of a UE based on a GLCS for a group of devices that share common group location information; and transmitting the estimated position of the UE to one or more other devices that are members of the group of devices.

In some implementations of the method and apparatuses described herein, transmitting the estimated position of the UE includes determining that a condition applies, the condition including one or more of that: the one or more other devices are on a same horizontal plane with the UE; the one or more other devices have a same orientation relative to the UE; or the one or more other devices have a same positioning capability as the UE; the GLCS is based at least in part on a designated leader device of the group of devices; determining the estimated position of the UE includes translating a LCS of the UE to the GLCS.

### BRIEF DESCRIPTION OF THE DRAWINGS

FIG. 1 illustrates an example of a wireless communications system that supports wireless angle-based positioning in accordance with aspects of the present disclosure.
FIG. 2 illustrates that PRS can be transmitted by different base stations.
FIG. 3 illustrates an overview of absolute and relative positioning scenarios.
FIG. 4 illustrates an example multi-cell RTT procedure.
FIG. 5 illustrates relative range estimation.
FIG. 6 illustrates an example of zone mapping that supports wireless angle-based positioning in accordance with aspects of the present disclosure.
FIG. 7 illustrates an example of an angle search window scenario that supports wireless angle-based positioning in accordance with aspects of the present disclosure.
FIG. 8 illustrates an example of a per-path AoA reporting scenario that supports wireless angle-based positioning in accordance with aspects of the present disclosure.
FIG. 9 illustrates an example of a system that supports wireless angle-based positioning in accordance with aspects of the present disclosure.
FIG. 10 illustrates an example of a system that supports wireless angle-based positioning in accordance with aspects of the present disclosure.
FIGs. 11 and 12 illustrate examples of block diagrams of devices that support wireless angle-based positioning in accordance with aspects of the present disclosure.
FIGs. 13 through 18 illustrate flowcharts of methods that support wireless angle-based positioning in accordance with aspects of the present disclosure.

### DETAILED DESCRIPTION

In some wireless communications systems, ways are provided for device positioning, such as for UE positioning. However, in some Uu interface UE-assisted and UE-based positioning methods, there is a lack of support for efficient UE-to-UE range and/or orientation determination, which can be important to support relative positioning applications across different vertical services, e.g., vehicle-to-everything (V2X), public safety, industrial internet of things (IIoT), commercial services, etc. Further, there is a lack of support to request and receive angle-based metrics including expected AoD and/or AoA search window and uncertainties based on prior course location information. Still further, some wireless communications systems face challenges in aligning measured and/or reported AoD and AoA across multiple or different nodes performing AoA and/or AoD positioning, e.g., UEs, RSUs, gNBs, etc.

Accordingly, this disclosure provides for techniques that support wireless angle-based positioning. For instance, an angular search window and associated uncertainty for positioning (e.g., sidelink positioning) can be determined based on an approximate position and/or range of a target-UE. This can reduce the overall angular search space over which angles are measured for AoA and/or computed for AoD. Further, reporting of per path measurements is provided to in multipath environments. Implementations are also provided for triggering, configuring, and reporting angle information including AoA and/or AoD in terms of a GCS and an LCS. As recited herein in the description, claims, and accompanying figures, AoA may represent sidelink-AoA and/or other implementation of AoA, and AoD may represent sidelink AoD and/or other implementation of AoD. Further, the various described signaling and/or transmissions may occur via sidelink transmissions (e.g., between UEs) and/or between network entities and UEs, such as over Uu.

By utilizing the described techniques, an overall angular search space over which angles are measured for AoA and/or computed AoD can be reduced. Further, reporting of per path measurements improves the range of an angular search window in multipath environments. The described techniques can thus reduce signaling overhead and usage of device resources such as processing and wireless resources. Further, speed and accuracy for device positioning can be increased.

Aspects of the present disclosure are described in the context of a wireless communications system. Aspects of the present disclosure are further illustrated and described with reference to device diagrams and flowcharts.

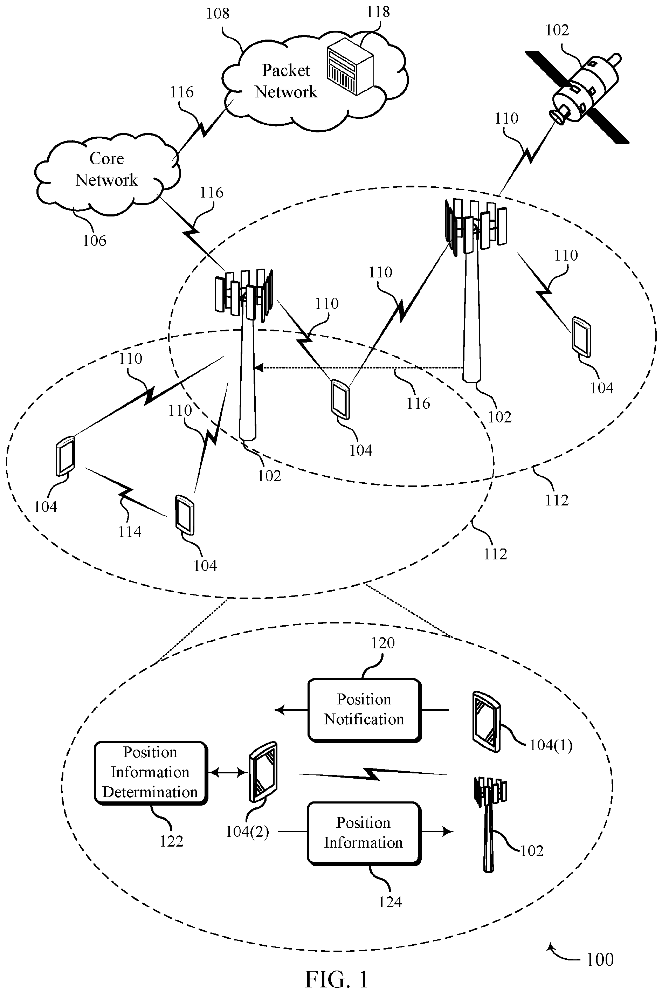

FIG. 1 illustrates an example of a wireless communications system 100 that supports wireless angle-based positioning in accordance with aspects of the present disclosure. The wireless communications system 100 may include one or more network entities 102, one or more UEs 104, a core network 106, and a packet data network 108. The wireless communications system 100 may support various radio access technologies. In some implementations, the wireless communications system 100 may be a 4G network, such as an LTE network or an LTE-Advanced (LTE-A) network. In some other implementations, the wireless communications system 100 may be a 5G network, such as an NR network. In other implementations, the wireless communications system 100 may be a combination of a 4G network and a 5G network, or other suitable radio access technology including Institute of Electrical and Electronics Engineers (IEEE) 802.11 (Wi-Fi), IEEE 802.16 (WiMAX), IEEE 802.20. The wireless communications system 100 may support radio access technologies beyond 5G. Additionally, the wireless communications system 100 may support technologies, such as time division multiple access (TDMA), frequency division multiple access (FDMA), or code division multiple access (CDMA), etc.

The one or more network entities 102 may be dispersed throughout a geographic region to form the wireless communications system 100. One or more of the network entities 102 described herein may be or include or may be referred to as a network node, a base station, a network element, a radio access network (RAN), a base transceiver station, an access point, a NodeB, an eNodeB (eNB), a next-generation NodeB (gNB), or other suitable terminology. A network entity 102 and a UE 104 may communicate via a communication link 110, which may be a wireless or wired connection. For example, a network entity 102 and a UE 104 may perform wireless communication (e.g., receive signaling, transmit signaling) over a Uu interface.

A network entity 102 may provide a geographic coverage area 112 for which the network entity 102 may support services (e.g., voice, video, packet data, messaging, broadcast, etc.) for one or more UEs 104 within the geographic coverage area 112. For example, a network entity 102 and a UE 104 may support wireless communication of signals related to services (e.g., voice, video, packet data, messaging, broadcast, etc.) according to one or multiple radio access technologies. In some implementations, a network entity 102 may be moveable, for example, a satellite associated with a non-terrestrial network. In some implementations, different geographic coverage areas 112 associated with the same or different radio access technologies may overlap, but the different geographic coverage areas 112 may be associated with different network entities 102. Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The one or more UEs 104 may be dispersed throughout a geographic region of the wireless communications system 100. A UE 104 may include or may be referred to as a mobile device, a wireless device, a remote device, a remote unit, a handheld device, or a subscriber device, or some other suitable terminology. In some implementations, the UE 104 may be referred to as a unit, a station, a terminal, or a client, among other examples. Additionally, or alternatively, the UE 104 may be referred to as an Internet-of-Things (IoT) device, an Internet-of-Everything (IoE) device, or machine-type communication (MTC) device, among other examples. In some implementations, a UE 104 may be stationary in the wireless communications system 100. In some other implementations, a UE 104 may be mobile in the wireless communications system 100.

The one or more UEs 104 may be devices in different forms or having different capabilities. Some examples of UEs 104 are illustrated in FIG. 1. A UE 104 may be capable of communicating with various types of devices, such as the network entities 102, other UEs 104, or network equipment (e.g., the core network 106, the packet data network 108, a relay device, an integrated access and backhaul (IAB) node, or another network equipment), as shown in FIG. 1. Additionally, or alternatively, a UE 104 may support communication with other network entities 102 or UEs 104, which may act as relays in the wireless communications system 100.

A UE 104 may also be able to support wireless communication directly with other UEs 104 over a communication link 114. For example, a UE 104 may support wireless communication directly with another UE 104 over a device-to-device (D2D) communication link. In some implementations, such as vehicle-to-vehicle (V2V) deployments, V2X deployments, or cellular-V2X deployments, the communication link 114 may be referred to as a sidelink. For example, a UE 104 may support wireless communication directly with another UE 104 over a PC5 interface.

A network entity 102 may support communications with the core network 106, or with another network entity 102, or both. For example, a network entity 102 may interface with the core network 106 through one or more backhaul links 116 (e.g., via an S1, N2, N2, or another network interface). The network entities 102 may communicate with each other over the backhaul links 116 (e.g., via an X2, Xn, or another network interface). In some implementations, the network entities 102 may communicate with each other directly (e.g., between the network entities 102). In some other implementations, the network entities 102 may communicate with each other or indirectly (e.g., via the core network 106). In some implementations, one or more network entities 102 may include subcomponents, such as an access network entity, which may be an example of an access node controller (ANC). An ANC may communicate with the one or more UEs 104 through one or more other access network transmission entities, which may be referred to as a radio heads, smart radio heads, or transmission-reception points (TRPs).

In some implementations, a network entity 102 may be configured in a disaggregated architecture, which may be configured to utilize a protocol stack physically or logically distributed among two or more network entities 102, such as an integrated access backhaul (IAB) network, an open RAN (O-RAN) (e.g., a network configuration sponsored by the O-RAN Alliance), or a virtualized RAN (vRAN) (e.g., a cloud RAN (C-RAN)). For example, a network entity 102 may include one or more of a central unit (CU), a distributed unit (DU), a radio unit (RU), a RAN Intelligent Controller (RIC) (e.g., a Near-Real Time RIC (Near-RT RIC), a Non-Real Time RIC (Non-RT RIC)), a Service Management and Orchestration (SMO) system, or any combination thereof.

An RU may also be referred to as a radio head, a smart radio head, a remote radio head (RRH), a remote radio unit (RRU), or a transmission reception point (TRP). One or more components of the network entities 102 in a disaggregated RAN architecture may be co-located, or one or more components of the network entities 102 may be located in distributed locations (e.g., separate physical locations). In some implementations, one or more network entities 102 of a disaggregated RAN architecture may be implemented as virtual units (e.g., a virtual CU (VCU), a virtual DU (VDU), a virtual RU (VRU)).

Split of functionality between a CU, a DU, and an RU may be flexible and may support different functionalities depending upon which functions (e.g., network layer functions, protocol layer functions, baseband functions, radio frequency functions, and any combinations thereof) are performed at a CU, a DU, or an RU. For example, a functional split of a protocol stack may be employed between a CU and a DU such that the CU may support one or more layers of the protocol stack and the DU may support one or more different layers of the protocol stack. In some implementations, the CU may host upper protocol layer (e.g., a layer 3 (L3), a layer 2 (L2)) functionality and signaling (e.g., RRC, service data adaption protocol (SDAP), Packet Data Convergence Protocol (PDCP)). The CU may be connected to one or more DUs or RUs, and the one or more DUs or RUs may host lower protocol layers, such as a layer 1 (L1) (e.g., physical (PHY) layer) or an L2 (e.g., radio link control (RLC) layer, medium access control (MAC) layer) functionality and signaling, and may each be at least partially controlled by the CU.

Additionally, or alternatively, a functional split of the protocol stack may be employed between a DU and an RU such that the DU may support one or more layers of the protocol stack and the RU may support one or more different layers of the protocol stack. The DU may support one or multiple different cells (e.g., via one or more RUs). In some implementations, a functional split between a CU and a DU, or between a DU and an RU may be within a protocol layer (e.g., some functions for a protocol layer may be performed by one of a CU, a DU, or an RU, while other functions of the protocol layer are performed by a different one of the CU, the DU, or the RU).

A CU may be functionally split further into CU control plane (CU-CP) and CU user plane (CU-UP) functions. A CU may be connected to one or more DUs via a midhaul communication link (e.g., F1, F1-c, F1-u), and a DU may be connected to one or more RUs via a fronthaul communication link (e.g., open fronthaul (FH) interface). In some implementations, a midhaul communication link or a fronthaul communication link may be implemented in accordance with an interface (e.g., a channel) between layers of a protocol stack supported by respective network entities 102 that are in communication via such communication links.

The core network 106 may support user authentication, access authorization, tracking, connectivity, and other access, routing, or mobility functions. The core network 106 may be an evolved packet core (EPC), or a 5G core (5GC), which may include a control plane entity that manages access and mobility (e.g., a mobility management entity (MME), an access and mobility management functions (AMF)) and a user plane entity that routes packets or interconnects to external networks (e.g., a serving gateway (S-GW), a Packet Data Network (PDN) gateway (P-GW), or a user plane function (UPF)). In some implementations, the control plane entity may manage non-access stratum (NAS) functions, such as mobility, authentication, and bearer management (e.g., data bearers, signal bearers, etc.) for the one or more UEs 104 served by the one or more network entities 102 associated with the core network 106.

The core network 106 may communicate with the packet data network 108 over one or more backhaul links 116 (e.g., via an S1, N2, N2, or another network interface). The packet data network 108 may include an application server 118. In some implementations, one or more UEs 104 may communicate with the application server 118. A UE 104 may establish a session (e.g., a protocol data unit (PDU) session, or the like) with the core network 106 via a network entity 102. The core network 106 may route traffic (e.g., control information, data, and the like) between the UE 104 and the application server 118 using the established session (e.g., the established PDU session). The PDU session may be an example of a logical connection between the UE 104 and the core network 106 (e.g., one or more network functions of the core network 106).

In the wireless communications system 100, the network entities 102 and the UEs 104 may use resources of the wireless communication system 100 (e.g., time resources (e.g., symbols, slots, subframes, frames, or the like) or frequency resources (e.g., subcarriers, carriers) to perform various operations (e.g., wireless communications). In some implementations, the network entities 102 and the UEs 104 may support different resource structures. For example, the network entities 102 and the UEs 104 may support different frame structures. In some implementations, such as in 4G, the network entities 102 and the UEs 104 may support a single frame structure. In some other implementations, such as in 5G and among other suitable radio access technologies, the network entities 102 and the UEs 104 may support various frame structures (i.e., multiple frame structures). The network entities 102 and the UEs 104 may support various frame structures based on one or more numerologies.

One or more numerologies may be supported in the wireless communications system 100, and a numerology may include a subcarrier spacing and a cyclic prefix. A first numerology (e.g., *µ*=0) may be associated with a first subcarrier spacing (e.g., 15 kHz) and a normal cyclic prefix. The first numerology (e.g., *µ*=0) associated with the first subcarrier spacing (e.g., 15 kHz) may utilize one slot per subframe. A second numerology (e.g., *µ*=1) may be associated with a second subcarrier spacing (e.g., 30 kHz) and a normal cyclic prefix. A third numerology (e.g., *µ*=2) may be associated with a third subcarrier spacing (e.g., 60 kHz) and a normal cyclic prefix or an extended cyclic prefix. A fourth numerology (e.g., *µ*=3) may be associated with a fourth subcarrier spacing (e.g., 120 kHz) and a normal cyclic prefix. A fifth numerology (e.g., *µ*=4) may be associated with a fifth subcarrier spacing (e.g., 240 kHz) and a normal cyclic prefix.

A time interval of a resource (e.g., a communication resource) may be organized according to frames (also referred to as radio frames). Each frame may have a duration, for example, a 10 millisecond (ms) duration. In some implementations, each frame may include multiple subframes. For example, each frame may include 10 subframes, and each subframe may have a duration, for example, a 1 ms duration. In some implementations, each frame may have the same duration. In some implementations, each subframe of a frame may have the same duration.

Additionally or alternatively, a time interval of a resource (e.g., a communication resource) may be organized according to slots. For example, a subframe may include a number (e.g., quantity) of slots. Each slot may include a number (e.g., quantity) of symbols (e.g., orthogonal frequency-division multiplexing (OFDM) symbols). In some implementations, the number (e.g., quantity) of slots for a subframe may depend on a numerology. For a normal cyclic prefix, a slot may include 14 symbols. For an extended cyclic prefix (e.g., applicable for 60 kHz subcarrier spacing), a slot may include 12 symbols. The relationship between the number of symbols per slot, the number of slots per subframe, and the number of slots per frame for a normal cyclic prefix and an extended cyclic prefix may depend on a numerology. It should be understood that reference to a first numerology (e.g., *µ*=0) associated with a first subcarrier spacing (e.g., 15 kHz) may be used interchangeably between subframes and slots.

In the wireless communications system 100, an electromagnetic (EM) spectrum may be split, based on frequency or wavelength, into various classes, frequency bands, frequency channels, etc. By way of example, the wireless communications system 100 may support one or multiple operating frequency bands, such as frequency range designations FR1 (410 MHz - 7.125 GHz), FR2 (24.25 GHz - 52.6 GHz), FR3 (7.125 GHz - 24.25 GHz), FR4 (52.6 GHz - 114.25 GHz), FR4a or FR4-1 (52.6 GHz - 71 GHz), and FR5 (114.25 GHz - 300 GHz). In some implementations, the network entities 102 and the UEs 104 may perform wireless communications over one or more of the operating frequency bands. In some implementations, FR1 may be used by the network entities 102 and the UEs 104, among other equipment or devices for cellular communications traffic (e.g., control information, data). In some implementations, FR2 may be used by the network entities 102 and the UEs 104, among other equipment or devices for short-range, high data rate capabilities.

FR1 may be associated with one or multiple numerologies (e.g., at least three numerologies). For example, FR1 may be associated with a first numerology (e.g., *µ*=0), which includes 15 kHz subcarrier spacing; a second numerology (e.g., *µ*=1), which includes 30 kHz subcarrier spacing; and a third numerology (e.g., *µ*=2), which includes 60 kHz subcarrier spacing. FR2 may be associated with one or multiple numerologies (e.g., at least 2 numerologies). For example, FR2 may be associated with a third numerology (e.g., *µ*=2), which includes 60 kHz subcarrier spacing; and a fourth numerology (e.g., *µ*=3), which includes 120 kHz subcarrier spacing.

According to implementations for wireless angle-based positioning, a UE 104(1) and/or a network entity 102 can transmit a position notification 120 to a UE 104(2), e.g., a target-UE as detailed throughout this disclosure. The position notification 120, for instance, can request position information, such as AoA measurements calculated at the UE 104(2). Additionally or alternatively, the position notification 120 can include information such as AoD information from the UE 104(1), LCS-to-GCS mapping information, etc. Accordingly, the UE 104(2) can perform position information determination 122, such to measure AoA at the UE 104(2), perform AoD mapping, compute a position estimate for the UE 104(2), etc. The UE 104(2) can then transmit position information 124 to the UE 104(1) and/or the network entity 102, such as including position information determined as part of the position information determination 122. Examples of information and/or operations associated with the position notification 120, the position information determination 122, and/or the position information 124 are presented in detail throughout this disclosure.

In some wireless communications systems, NR positioning based on NR Uu signals and standalone (SA) architecture (e.g., beam-based transmissions) are specified such as specified in Rel-16. The targeted use cases include commercial and regulatory (emergency services) scenarios such as as in Rel-15. The performance requirements include the following:

| **Positioning Error** | **Indoor** | **Outdoor** |
|---|---|---|
| Horizontal Positioning | < **3m for 80%** of UEs | < **10m for 80%** of UEs |
| Vertical Positioning | < **3m for 80%** of UEs | < **3m for 80%** of UEs |

Current 3GPP Rel-17 Positioning has recently defined the positioning performance requirements for Commercial and IIoT use cases as follows:

| **Positioning Error** | **Commercial** | **IIoT** |
|---|---|---|
| Horizontal Positioning | (< **1 m**) for **90%** of UEs | (< **0.2 m**) for **90% of UEs;** |
| Vertical Positioning | (< **3 m**) for **90%** of UEs | (< 1 **m**) **for 90% of UEs** |
| Physical layer latency for position estimation of UE | (< **10 ms)** | (< **10 ms**) |
| End-to-End Latency for position estimation of UE | (<**100 ms**) | (< **100 ms**, in the order of **10 ms** is desired) |

Examples of supported positioning techniques in Rel-16 are listed in Table 1:

**Table 1: Supported Rel-16 UE positioning methods**

| **Method** | **UE-based** | **UE-assisted, LMF-based** | **NG-RAN node assisted** | **SUPL** |
|---|---|---|---|---|
| A-GNSS | Yes | Yes | No | Yes (UE-based and UE-assisted) |
| OTDOA^{Note1, Note 2} | No | Yes | No | Yes (UE-assisted) |
| E-CID ^{Note 4} | No | Yes | Yes | Yes for E-UTRA (UE-assisted) |
| Sensor | Yes | Yes | No | No |
| WLAN | Yes | Yes | No | Yes |
| Bluetooth | No | Yes | No | No |
| TBS ^{Note 5} | Yes | Yes | No | Yes (MBS) |
| DL-TDOA | Yes | Yes | No | No |
| DL-AoD | Yes | Yes | No | No |
| Multi-RTT | No | Yes | Yes | No |
| NR E-CID | No | Yes | FFS | No |
| UL-TDOA | No | No | Yes | No |
| UL-AoA | No | No | Yes | No |
| NOTE 1: This includes TBS positioning based on PRS signals. | | | | |
| NOTE 2: In this version of the specification only OTDOA based on LTE signals is supported. | | | | |
| NOTE 4: This includes Cell-ID for NR method. | | | | |
| NOTE 5: In this version of the specification only for TBS positioning based on MBS signals. | | | | |

Separate positioning techniques as indicated in Table 1 can be currently configured and performed based on the requirements of a location management function (LMF) and UE capabilities. The transmission of Uu (uplink and downlink) Positioning Reference Signals (PRS) enable the UE to perform UE positioning-related measurements to enable the computation of a UE's absolute location estimate and are configured per Transmission Reception Point (TRP), where a TRP may include a set of one or more beams. A conceptual overview is illustrated in FIG. 1.

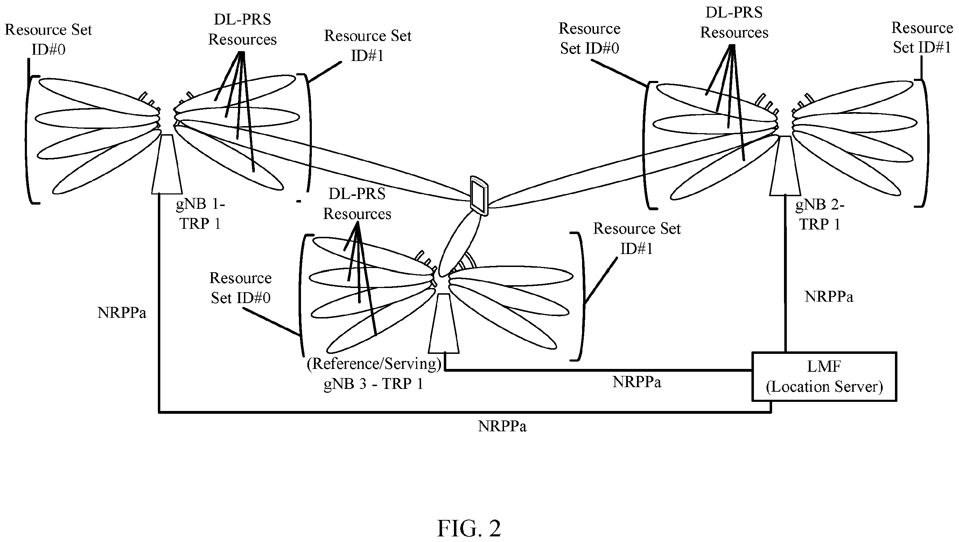

**FIG. 2** illustrates that according to Rel-16, the PRS can be transmitted by different base stations (serving and neighboring) using narrow beams over FR1 and FR2 , which is relatively different when compared to LTE where the PRS was transmitted across the whole cell. The PRS can be locally associated with a PRS Resource identifier (ID) and Resource Set ID for a base station (TRP). Similarly, UE positioning measurements such as Reference Signal Time Difference (RSTD) and PRS RSRP measurements are made between beams (e.g., between a different pair of downlink (DL) PRS resources or DL PRS resource sets) as opposed to different cells as was the case in LTE. In addition, there are additional uplink (UL) positioning methods for the network to exploit in order to compute the target UE's location. Table 2 (below) show the reference signal to measurements mapping required for each of the supported RAT-dependent positioning techniques at the UE and gNB, respectively. RAT-dependent positioning techniques involve the 3GPP RAT and core network entities to perform the position estimation of the UE, which are differentiated from RAT-independent positioning techniques which rely on global navigation satellite system (GNSS), inertial measurement unit (IMU) sensor, wireless local access network (WLAN) and Bluetooth technologies for performing target device (UE) positioning.

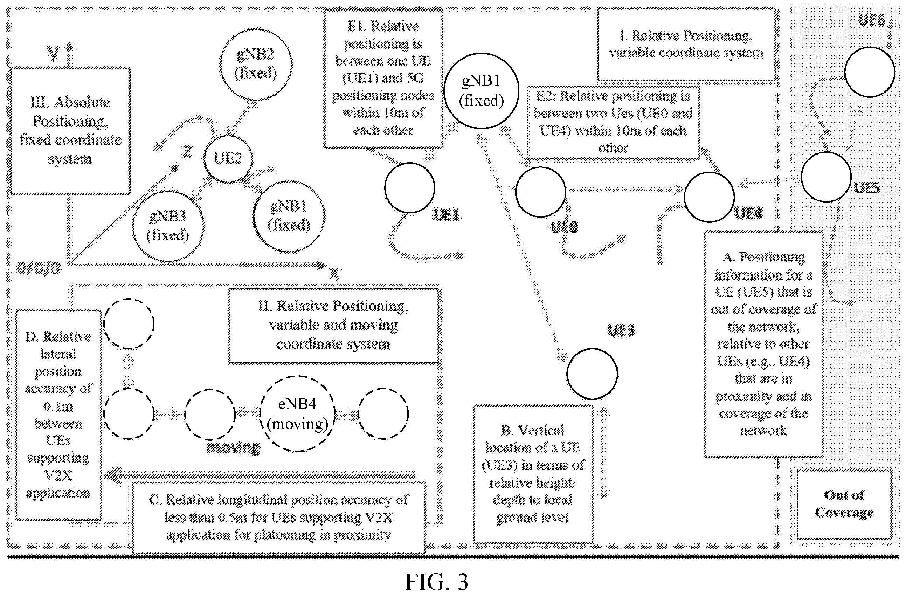

**FIG. 3** is an overview of absolute and relative positioning scenarios, such as defined in the system architectural (stage 1) study using three different coordinate systems.
- Absolute Positioning, fixed coordinate systems
- Relative Positioning, variable and moving coordinate system
- Relative Positioning, variable coordinate system

The following RAT-dependent positioning techniques are supported in Rel-16 and Rel-17:

### DL-TDoA

The DL-time difference of arrival (TDOA) positioning method makes use of the DL RSTD (and optionally DL PRS RSRP) of downlink signals received from multiple TPs, at the UE. The UE measures the DL RSTD (and optionally DL PRS RSRP) of the received signals using assistance data received from the positioning server, and the resulting measurements are used along with other configuration information to locate the UE in relation to the neighboring TPs.

### DL-AoD

The DL AoD positioning method makes use of the measured DL PRS RSRP of downlink signals received from multiple TPs, at the UE. The UE measures the DL PRS RSRP of the received signals using assistance data received from the positioning server, and the resulting measurements are used along with other configuration information to locate the UE in relation to the neighboring TPs.

### Multi-RTT

The Multi-RTT positioning method makes use of the UE Rx-Tx measurements and DL PRS RSRP of downlink signals received from multiple TRPs, measured by the UE and the measured gNB Rx-Tx measurements and UL sounding reference signal (SRS)-RSRP at multiple TRPs of uplink signals transmitted from UE.

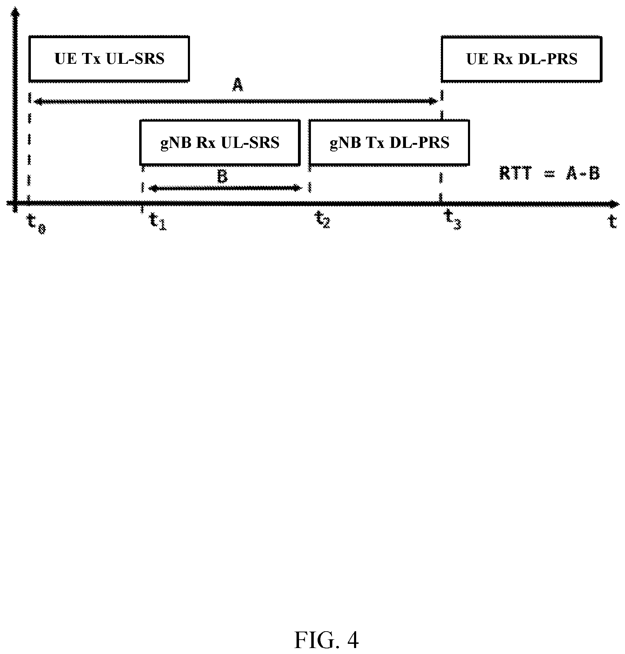

The UE measures the UE Rx-Tx measurements (and optionally DL PRS RSRP of the received signals) using assistance data received from the positioning server, and the TRPs measure the gNB Rx-Tx measurements (and optionally UL SRS-RSRP of the received signals) using assistance data received from the positioning server. The measurements are used to determine the RTT at the positioning server which are used to estimate the location of the UE (See FIG. 4). Multi-RTT is only supported for UE-assisted/NG-RAN assisted positioning techniques as noted in Table 1.

**FIG. 4** illustrates an example multi-cell RTT procedure.

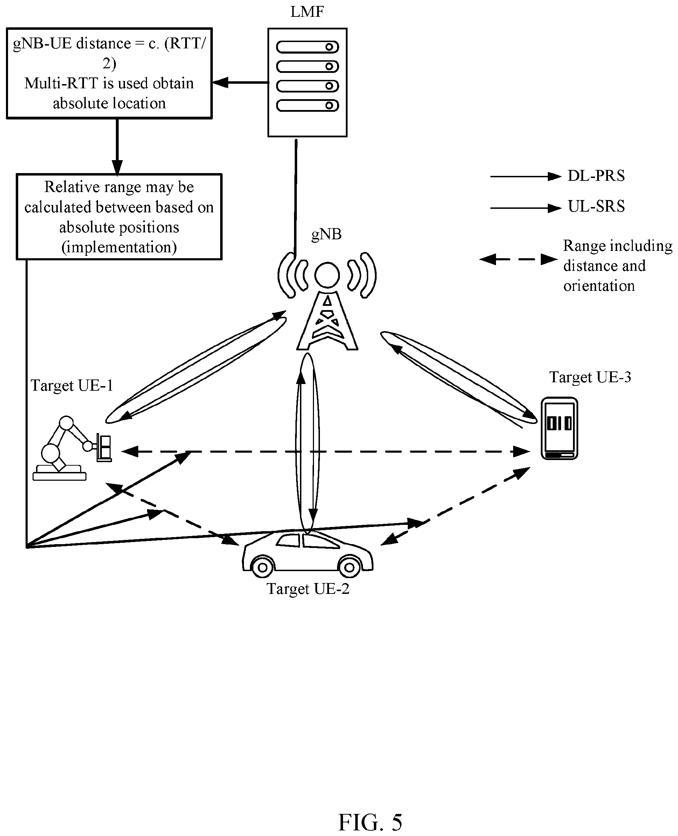

**FIG. 5** illustrates relative range estimation using the existing single gNB RTT positioning framework and represents an implementation-based approach to compute the relative distance between two UEs. This approach is high in latency and is not an efficient method in terms of procedures and signaling overhead.

### E-CID/ NR E-CID

In Enhanced Cell ID (CID) positioning method, the position of an UE is estimated with the knowledge of its serving ng-eNB, gNB and cell and is based on LTE signals. The information about the serving ng-eNB, gNB and cell may be obtained by paging, registration, or other methods. NR Enhanced Cell ID (NR E CID) positioning refers to techniques which use additional UE measurements and/or NR radio resource and other measurements to improve the UE location estimate using NR signals.

Although NR E-CID positioning may utilize some of the same measurements as the measurement control system in the RRC protocol, the UE generally is not expected to make additional measurements for the sole purpose of positioning; i.e., the positioning procedures do not supply a measurement configuration or measurement control message, and the UE reports the measurements that it has available rather than being required to take additional measurement actions.

### UL-TDoA

The UL TDOA positioning method makes use of the UL TDOA (and optionally UL SRS-RSRP) at multiple RPs of uplink signals transmitted from UE. The RPs measure the UL TDOA (and optionally UL SRS-RSRP) of the received signals using assistance data received from the positioning server, and the resulting measurements are used along with other configuration information to estimate the location of the UE.

### UL-AoA

The UL AoA positioning method makes use of the measured azimuth and the zenith of arrival at multiple RPs of uplink signals transmitted from UE. The RPs measure A-AoA and Z-AoA of the received signals using assistance data received from the positioning server, and the resulting measurements are used along with other configuration information to estimate the location of the UE.

### RAT-Independent Positioning Techniques:

### Network-assisted GNSS methods

These methods make use of UEs that are equipped with radio receivers capable of receiving GNSS signals. In 3GPP specifications the term GNSS encompasses both global and regional/augmentation navigation satellite systems.

Examples of global navigation satellite systems include global positioning system (GPS), Modernized GPS, Galileo, GLONASS, and BeiDou Navigation Satellite System (BDS). Regional navigation satellite systems include Quasi Zenith Satellite System (QZSS) while the many augmentation systems, are classified under the generic term of Space Based Augmentation Systems (SBAS) and provide regional augmentation services. In this concept, different GNSSs (e.g., GPS, Galileo, etc.) can be used separately or in combination to determine the location of a UE.

### Barometric pressure sensor positioning

The barometric pressure sensor method makes use of barometric sensors to determine the vertical component of the position of the UE. The UE measures barometric pressure, optionally aided by assistance data, to calculate the vertical component of its location or to send measurements to the positioning server for position calculation. This method should be combined with other positioning methods to determine the 3D position of the UE.

### WLAN positioning

The WLAN positioning method makes use of the WLAN measurements (access point (AP) identifiers and optionally other measurements) and databases to determine the location of the UE. The UE measures received signals from WLAN access points, optionally aided by assistance data, to send measurements to the positioning server for position calculation. Using the measurement results and a references database, the location of the UE is calculated.

Alternatively, the UE makes use of WLAN measurements and optionally WLAN AP assistance data provided by the positioning server, to determine its location.

### Bluetooth positioning

The Bluetooth positioning method makes use of Bluetooth measurements (beacon identifiers and optionally other measurements) to determine the location of the UE. The UE measures received signals from Bluetooth beacons. Using the measurement results and a references database, the location of the UE is calculated. The Bluetooth methods may be combined with other positioning methods (e.g., WLAN) to improve positioning accuracy of the UE.

### TBS positioning

A Terrestrial Beacon System (TBS) consists of a network of ground-based transmitters, broadcasting signals only for positioning purposes. The current type of TBS positioning signals are the Metropolitan Beacon System (MBS) signals and Positioning Reference Signals (PRS). The UE measures received TBS signals, optionally aided by assistance data, to calculate its location or to send measurements to the positioning server for position calculation.

### Motion sensor positioning

The motion sensor method makes use of different sensors such as accelerometers, gyros, magnetometers, to calculate the displacement of UE. The UE estimates a relative displacement based upon a reference position and/or reference time. UE sends a report comprising the determined relative displacement which can be used to determine the absolute position. This method should be used with other positioning methods for hybrid positioning.

Table 2 presents UE Measurements to enable RAT-dependent positioning techniques:

**Table 2**

| **DL/UL Reference Signals** | **UE Measurements** | **To facilitate support of the following positioning techniques** |
|---|---|---|
| Rel. 16 DL PRS | DL RSTD | DL-TDOA |
| Rel. 16 DL PRS | DL PRS RSRP | DL-TDOA, DL-AoD, Multi-RTT |
| Rel. 16 DL PRS / Rel. 16 SRS for positioning | UE Rx-Tx time difference | Multi-RTT |
| Rel. 15 SSB / CSI-RS for RRM | SS-RSRP(RSRP for RRM), SS-RSRQ(for RRM), CSI-RSRP (for RRM), CSI-RSRQ (for RRM), SS-RSRPB (for RRM) | E-CID |

Table 3 presents gNB Measurements to enable RAT-dependent positioning techniques:

**Table 3**

| **DL/UL Reference Signals** | **gNB Measurements** | **To facilitate support of the following positioning techniques** |
|---|---|---|
| Rel. 16 SRS for positioning | UL RTOA | UL-TDOA |
| Rel. 16 SRS for positioning | UL SRS-RSRP | UL-TDOA, UL-AoA, Multi-RTT |
| Rel. 16 SRS for positioning, Rel. 16 DL PRS | gNB Rx-Tx time difference | Multi-RTT |
| Rel. 16 SRS for positioning, | AoA and ZoA | UL-AoA, Multi-RTT |

### Measurement and Report Configuration

For a conceptual overview of the current Uu implementation with respect to different positioning methods in Rel-16/-17, the overall measurement configuration and reporting is illustrated below . The measurement and reporting are performed per configured RAT-dependent/RAT-independent positioning method

The following *RequestLocationInformation* message body in a LPP message is used by the location server to request positioning measurements or a position estimate from the target device.

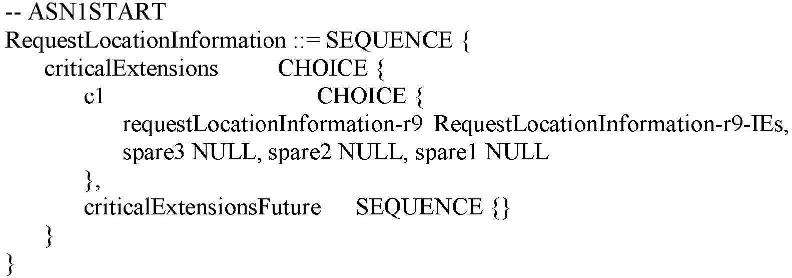

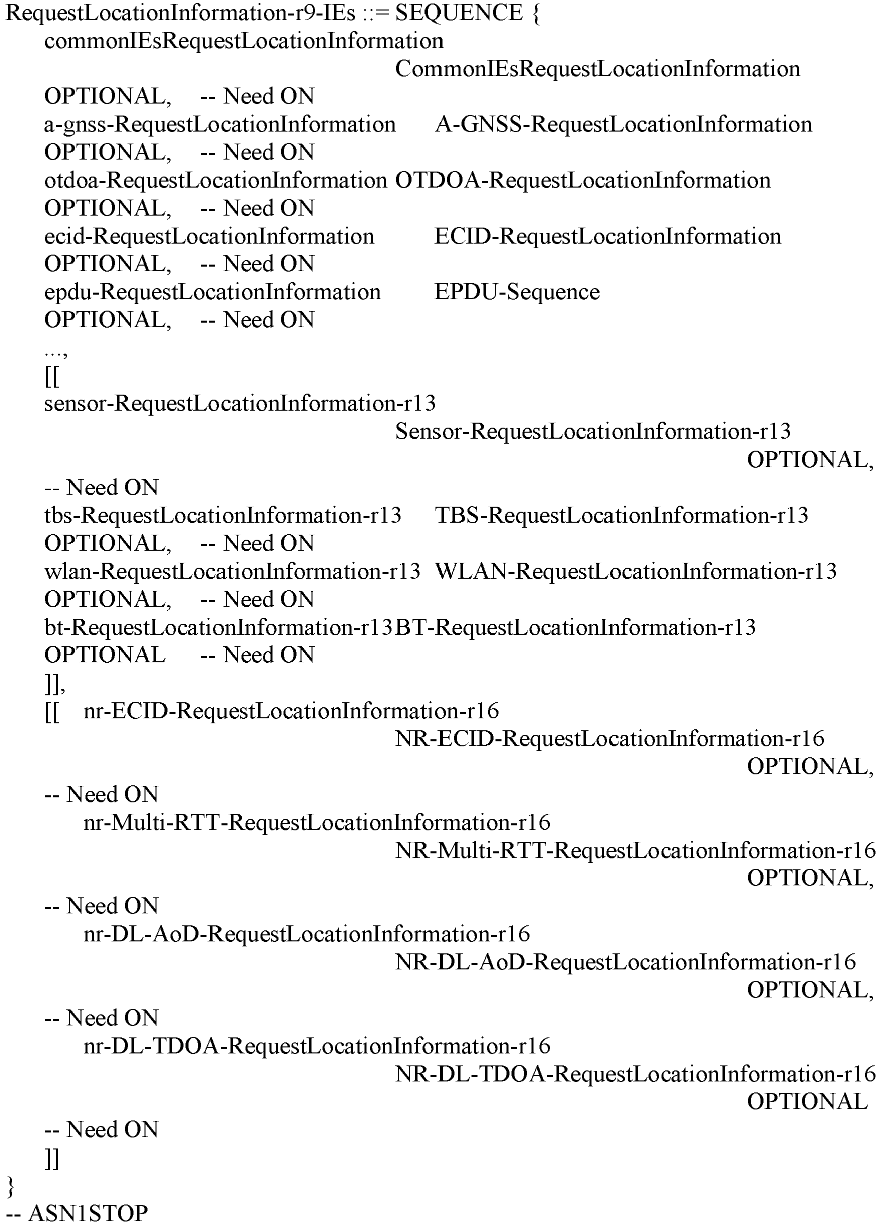

The following *ProvideLocationInformation* message body in a LPP message is used by the target device to provide positioning measurements or position estimates to the location server.

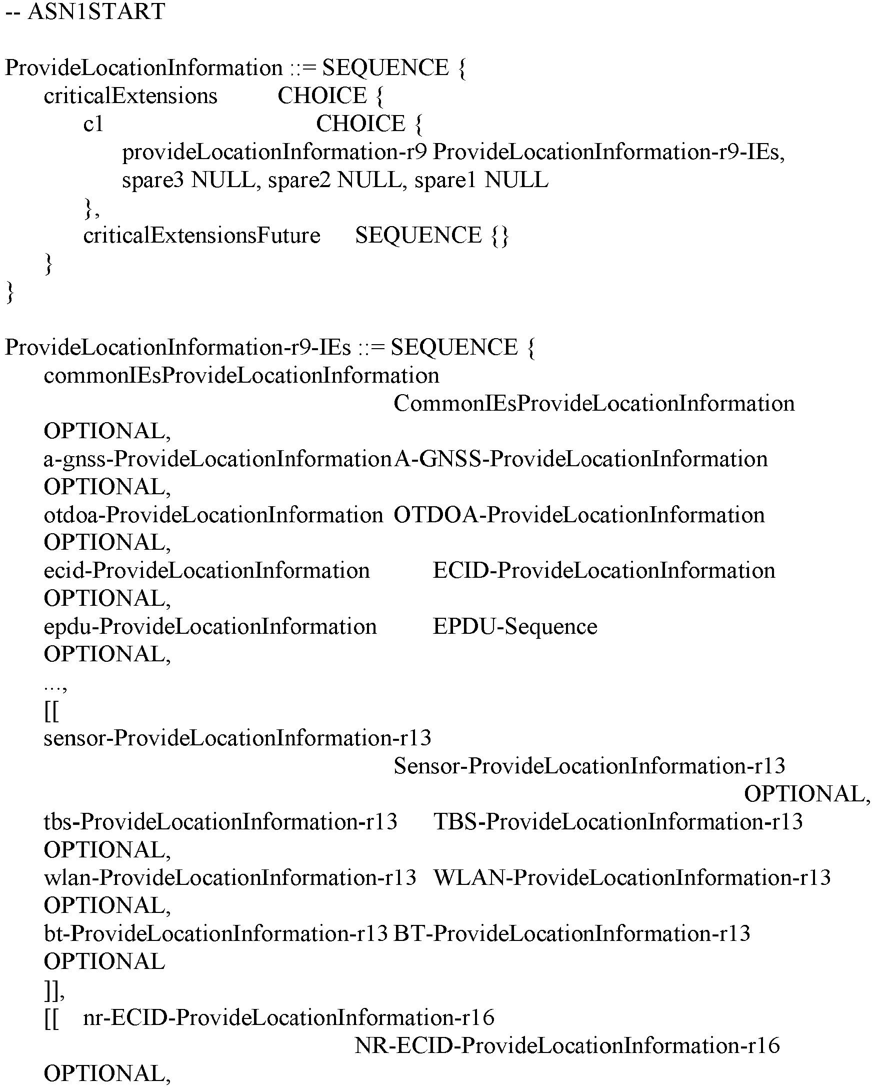

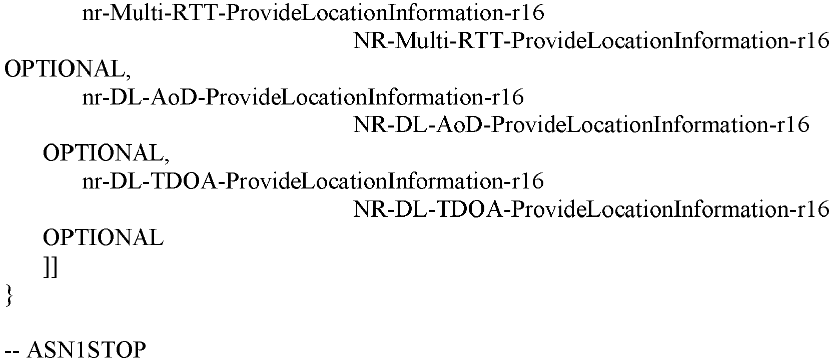

### RAT-dependent Positioning Measurements

The different DL measurements including DL PRS-RSRP, DL RSTD and UE Rx-Tx Time Difference required for the supported RAT-dependent positioning techniques are shown in Table 4. The following measurement configurations are specified:
- 4 Pair of DL RSTD measurements can be performed per pair of cells. Each measurement is performed between a different pair of DL PRS Resources/Resource Sets with a single reference timing.
- 8 DL PRS RSRP measurements can be performed on different DL PRS resources from the same cell.

Table 2 presents DL Measurements used for DL-based positioning methods.

**Table 4**

| **DL PRS reference signal received power (DL PRS-RSRP)** | |
|---|---|
| **Definition** | DL PRS reference signal received power (DL PRS-RSRP), is defined as the linear average over the power contributions (in [W]) of the resource elements that carry DL PRS reference signals configured for RSRP measurements within the considered measurement frequency bandwidth. |
| | For frequency range 1, the reference point for the DL PRS-RSRP shall be the antenna connector of the UE. For frequency range 2, DL PRS-RSRP shall be measured based on the combined signal from antenna elements corresponding to a given receiver branch. For frequency range 1 and 2, if receiver diversity is |
| | in use by the UE, the reported DL PRS-RSRP value shall not be lower than the corresponding DL PRS-RSRP of any of the individual receiver branches. |
| **Applicable for** | RRC_CONNECTED intra-frequency, |
| | RRC_CONNECTED inter-frequency |

| **DL reference signal time difference (DL RSTD)** | |
|---|---|
| **Definition** | DL reference signal time difference (DL RSTD) is the DL relative timing difference between the positioning node *j* and the reference positioning node *i*, defined as T_{SubframeRxj} - T_{SubframeRxi}, |
| | Where: |
| | T_{SubframeRxj} is the time when the UE receives the start of one subframe from positioning node*j*. |
| | T_{SubframeRxi} is the time when the UE receives the corresponding start of one subframe from positioning node *i* that is closest in time to the subframe received from positioning node*j*. |
| | Multiple DL PRS resources can be used to determine the start of one subframe from a positioning node. |
| | For frequency range 1, the reference point for the DL RSTD shall be the antenna connector of the UE. For frequency range 2, the reference point for the DL RSTD shall be the antenna of the UE. |
| **Applicable for** | RRC_CONNECTED intra-frequency |
| | RRC_CONNECTED inter-frequency |

| **UE Rx - Tx time difference** | |
|---|---|
| **Definition** | The UE Rx - Tx time difference is defined as T_{UE-RX} - T_{UE-TX} |
| | Where: |
| | T_{UE-RX} is the UE received timing of downlink subframe #*i* from a positioning node, defined by the first detected path in time. |
| | T_{UE-TX} is the UE transmit timing of uplink subframe #*j* that is closest in time to the subframe #i received from the positioning node. |
| | Multiple DL PRS resources can be used to determine the start of one subframe of the first arrival path of the positioning node. |
| | For frequency range 1, the reference point for T_{UE-RX} measurement shall be the Rx antenna connector of the UE and the reference point for T_{UE-TX} measurement shall be the Tx antenna connector of the UE. For frequency range 2, the reference point for T_{UE-RX} measurement shall be the Rx antenna of the UE and the reference point for T_{UE-TX} measurement shall be the Tx antenna of the UE. |
| **Applicable for** | RRC_CONNECTED intra-frequency |
| | RRC_CONNECTED inter-frequency |

To improve on challenges presented in device positioning in some wireless communications systems, the present disclosure details solutions for enhancing the accuracy of angle-based measurements (e.g., over sidelink), which can be applicable to both sidelink AoD and sidelink AoA positioning techniques. For instance, techniques are described for configuring the expected AoD and AoA range of values and/or uncertainty ranges to facilitate AoD and AoA measurements respectively. A node performing one of the angle-based measurements can further report actual uncertainty based on its measurement capability. Further, techniques for configuring and reporting multiple AoA measurements and sidelink PRS RSRP measurements according to each received path of multiple receive paths in order to resolve multipath ambiguities and enhance RSRP measurement accuracy. As discussed herein, AoD and AoA may refer to sidelink AoD and sidelink AoA, respectively. Implementations are also provided for triggering, configuring, and reporting angle information including AoA and/or AoD in terms of a GCS and an LCS.

The various implementations described herein may be implemented in combination with each other to support NR RAT-dependent positioning methods, such as over the sidelink (PC5) interface. Further, for the purposes of this disclosure, a positioning-related reference signal may be referred to as a reference signal used for positioning procedures/purposes in order to estimate a target-UE's location (e.g., PRS), or based on existing reference signals such as channel state information (CSI)-RS or SRS; a target-UE may be referred to as a device/entity to be localized/positioned. In various embodiments, the term 'PRS' may refer to any signal such as a reference signal, which may or may not be used primarily for positioning.

The following terms may be used within this disclosure and the following represents some example non-limiting explanations for these terms:
- **Initiator device** initiates a positioning/ranging session (e.g., for sidelink positioning/ranging), and may be implemented as a network entity (e.g., gNB, LMF), a UE, a RSU, etc.
- **Responder device** responds to a positioning/ranging session (e.g., for sidelink positioning/ranging) from an initiator device, and may be implemented as a network entity (e.g., gNB, LMF), a UE, an RSU, etc.
- **Target-UE** may be referred to as a UE of interest whose position (absolute or relative) is to be obtained by a network or by the UE itself.
- **Sidelink positioning:** Positioning UE using reference signals transmitted over SL (e.g., PC5 interface) to obtain absolute position, relative position, and/or ranging information.
- **Ranging:** determination of a distance and/or a direction between a UE and another entity, e.g., an anchor UE.
- **Anchor UE:** UE supporting positioning of a target UE, e.g., by transmitting and/or receiving reference signals for positioning, providing positioning-related information, etc., such as over a sidelink interface.
- **SL positioning node** may refer to a network entity and/or device (e.g., a UE) participating in a SL positioning session, and may be implemented as an LMF (location server), gNB, UE, RSU, anchor UE, initiator and/or responder UE, etc.
- **Configuration entity:** A node network node and/or other device (e.g., UE) capable of configuring time-frequency resources and related positioning configurations.

In at least some implementations, a sidelink positioning measurement node and/or target-UE may receive an expected angle range and uncertainty information corresponding to a value range or window from a configuration entity. The value range and/or search window of the expected angle may be expressed in terms of angular values and/or in time units (e.g., corresponding to different time bases). Furthermore, according to different implementations, the expected angle range and uncertainty may apply to an absolute or relative range and/or position estimate of the target-UE.

In at least some implementations, a configuration entity may have prior knowledge of an approximate position of the target-UE. This approximate position may correspond to the absolute and/or relative range estimate (e.g., including rough distance and/or directions). The approximate position of the target-UE may be obtained via location-based procedures and positioning techniques such as E-CID (enhanced cell-id), SL E-CID via SCI, downlink control information (DCI), MAC-CE, RRC, PC5-RRC, LTE Positioning Protocol (LPP), NR Positioning Protocol A (NRPPa) signaling, etc. Further, timing advance procedures may be used to determine link RTT, channel measurements (e.g., CSI), selected beams during initial access procedures (e.g., based on synchronization signal (SS)-RSRP measurements), RSS measurements (e.g., RSRP, RSSI), and/or pathloss estimates on the Uu and/or SL may also be used to determine an approximate position estimate of the target-UE.

In alternative or additional implementations, approximate position information may be obtained using defined zone identifiers (IDs), whereby a zone ID is calculated based on an absolute location of a target-UE. A zone ID can be defined by a rectangular grid and may not provide additional direction information, and thus further subsets of zone IDs may be defined to indicate a quadrant of the rectangular grid in which a target-UE is located with respect to a different UE, such as an initiator UE and/or anchor UE.

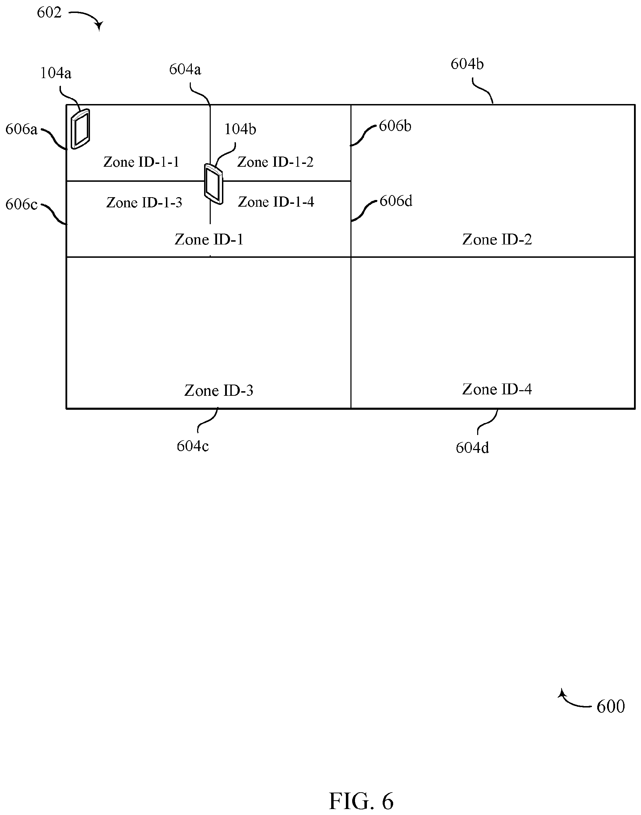

**FIG. 6** illustrates an example of zone mapping 600 that supports wireless angle-based positioning in accordance with aspects of the present disclosure. The zone mapping 600 includes a mapping grid 602 that is divided into quadrants including a zone 604a, zone 604b, zone 604c, and a zone 604d. In implementations, each of the zones 604 includes a respective zone ID, e.g., Zone ID 1, Zone ID 2. Zone ID 3. and Zone ID 4. Further, the zone 604a is divided into a subzone 606a, a subzone 606b, a subzone 606c, and a subzone 606d. In implementations, each of the subzones 606 includes a respective subzone ID, e.g., Zone IDs 1-1, 1-2, 1-3, and 1-4.

In implementations, an approximate location of a target-UE 104a with respect to a UE 104b (e.g., an initiator UE, an anchor UE, etc.) may correspond to Zone ID 1-1. A length of the subzone IDs may be signaled to the UE 104b, in addition to a *sl-ZoneLength* already signaled using RRC for the calculation of a normal zone ID. Another parameter may also be signaled to indicate the granularity in which the main zone ID (e.g., Zone ID-1) is to be divided into subzones. For instance, in the zone mapping 600, this parameter may have a value of 4.

According to implementations, using the notion of zones and subzones enables the reduction of a search space of the AoD computation with respect to the target-UE 104a or AoA measurement at the positioning measurement node (e.g., the UE 104b), which reduces angle ambiguity and lowers the latency of the overall computation. Uncertainty information can also be important to define the angular search window since this depends on the confidence of the approximate position estimate of a target-UE.

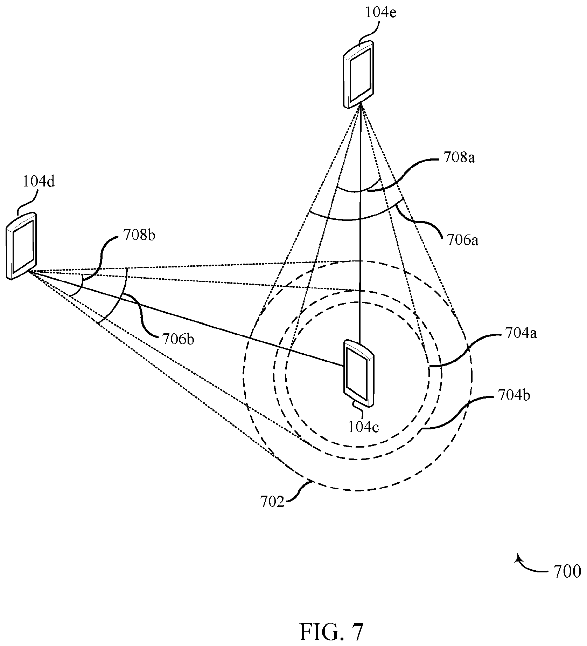

**FIG. 7** illustrates an example of an angle search window scenario 700 that supports wireless angle-based positioning in accordance with aspects of the present disclosure. The angle search window scenario 700 includes a target-UE 104c, a UE 104d, and a UE 104d. The UEs 104d, 104e may represent UEs that assist in determining position of the UE 104c, and may be implemented as initiator UEs, anchor UEs, etc. In at least some implementations, the UEs 104c-104e are position along a horizontal plane, such as based on azimuth angle. The angle search window scenario 700 illustrates an absolute position uncertainty 702 for a position of the target-UE 104c relative to the UEs 104d, 104e. Further, a relative position uncertainty 704a for the UE 104e is illustrated which may represent a relative position and/or range uncertainty value for a position of the target-UE 104c relative to the UE 104e, and a relative position uncertainty 704b is illustrated for the UE 104d which may represent a relative position and/or range uncertainty value for a position of the target-UE 104c relative to the UE 104d.

Based on the absolute position uncertainty 702, an absolute position search angle window 706a is calculated for the UE 104e and an absolute position search angle window 706b is calculated for the UE 104d. Based on the relative position uncertainty 704a for the UE 104e, a relative position search angle window 708a is calculated for the 104e; and based on the relative position uncertainty 704b for the UE 104d, a relative position search angle window 708b is calculated for the 104d.

Based at least in part on the angle search window scenario 700, Table 5 describes assistance information that can be signaled to the target-UE 104c from UEs 104d, 104e and/or other devices with knowledge of the absolute and relative positions and/or ranges relative to the target-UE 104c and the UEs 104d, 104e such as to reduce the angular search space as described in the angle search window scenario 700. Further, Table 5 includes minimum (min) and maximum (max) values for the respective search angle windows.

**Table 5: Expected SL angle search window parameters to be signaled to the Target-UE**

| **Type of Search Window** | **UE 104d Configuration** | **UE 104e Configuration** |
|---|---|---|
| Based on Rough Relative Position or range | θₘᵢₙ₋₁ ≤ θ_{1(exp-absolute)} ≤ θₘₐₓ₋₁ (defined by an angular resolution in degrees or radians together with an associated uncertainty for the window) | θₘᵢₙ₋₂ ≤ θ_{2(exp-absolute)} ≤ θₘₐₓ₋₂ (defined by an angular resolution in degrees or radians together with an associated uncertainty for the window) |
| θ = relative position search angle window | | |
| | associated timestamp | associated timestamp |
| Based on Rough Absolute Position | φₘᵢₙ₋₁ ≤ φ₁₍ₑₓₚ₋ᵣₑₗₐₜᵢᵥₑ₎ ≤ φₘₐₓ₋₁ (Defined by an angular resolution in degrees or radians together with an associated uncertainty for the window) | φₘᵢₙ₋₂ ≤ φ₂₍ₑₓₚ₋ᵣₑₗₐₜᵢᵥₑ₎ ≤ φₘₐₓ₋₂ (Defined by an angular resolution in degrees or radians together with an associated uncertainty for the window) |
| φ = absolute position search angle window | | |
| | associated timestamp | associated timestamp |

In at least some implementations, angular resolution may be defined in terms of the SL PRS transmission in terms of the sub-carrier spacing and sampling time. The associated timestamp can be associated with each angular search window to determine its validity. Alternatively or additionally, the timestamp may be in the form of another time window aligned with the validity of the angular search window.

Alternatively or additionally, separate angle search windows may also be signaled for azimuth angles (horizontal plane) and zenith angles (vertical plane), e.g. the configurations shown in Table 1 are signaled separately for azimuth angles and zenith angles. This can be implemented if the UE 104d and/or the UE 104e (respectively) and the target-UE 104c may be located on different altitudes, e.g. not along the same horizontal plane. Alternatively or additionally, a maximum number of configured angle search windows can be based on a UE's capability, wherein this capability may be signaled to the network and/or another positioning device such as another UE and/or an RSU. The signaling can be based on one or more of PC5-RRC, RRC or LPP.

According to implementations, techniques are provided to reduce the ambiguity of multipath signals on angle-based measurements for performing absolute positioning and/or relative positioning or ranging scenarios, such as for sidelink-based positioning. Such implementations can be enabled by request and report signaling triggered by an initiator UE to a responder UE and/or a target-UE via lower layer signaling (e.g., SCI, SL MAC-CE) and/or higher layer (e.g., PC5 RRC, SL Positioning Protocol, PC5-S signaling) or combinations thereof.

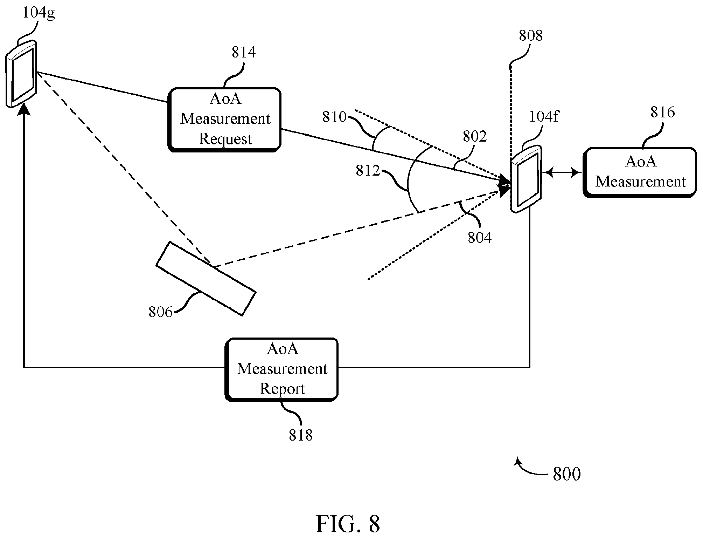

**FIG. 8** illustrates an example of a per-path AoA reporting scenario 800 that supports wireless angle-based positioning in accordance with aspects of the present disclosure. The AoA reporting scenario 800 includes a target-UE 104f and a UE 104g that supports location determination for the target-UE 104f. The AoA reporting scenario 800 also illustrates a first arrival path 802 and a second arrival path 804 for signal(s) transmitted by the UE 104g to the UE 104f. The second arrival path 804, for example, represents a signal arrival path for signal transmitted from the UE 104g and reflected by a reflector object 806 before being received by the UE 104f. The UE 104f also implements a reference local axis 808 that can be used by the UE 104f to determine AoA of received signals.

The AoA reporting scenario 800 illustrates a true AoA angle 810 determined for the first arrival path 802, which can be represented as θᵣₑₗₐₜᵢᵥₑ. Further, an AoA angle 812 is illustrated which can represent an AoA angle determined based on the second arrival path 804. The AoA angle 812, for instance, represents an AoA angle ambiguity introduced by the second arrival path 804, and can be represented as θ_{R1(relative)}. In the reporting scenario 800 for the case of AoA, the first arrival path 802 can be considered as LOS, for which the AoA can be measured. However, the angular search space for the measured AoA can be greater than the true relative AoA at the target-UE 104f, where the reflected AoA θ_{R1(relative)} > true θᵣₑₗₐₜᵢᵥₑ. In at least some implementations the AoA reporting scenario 800 is illustrated based on both the UE 104g and the target-UE 104f being on the same horizontal plane (e.g., only considering azimuth), but may also be applicable in a 3D scenario such as where the UE 104g and the target-UE 104f are on different altitudes and thereby also considering zenith of arrival reflections.

Further to the AoA reporting scenario 800, the UE 104g transmits a AoA measurement request 814 to the target-UE 104f request AoA measurements for signal transmitted from the UE 104g to the target-UE 104f. The AoA measurement request 814, for instance, requests AoA measurements for multiple receive paths at the target-UE 104f. The target-UE 104f performs AoA measurement 816 for the first arrival path 802 and the second arrival path 804 (and optionally other receive paths), generates an AoA measurement report 818 that includes the AoA measurements on a per-path basis, and transmits the AoA measurement report 818 to the UE 104g.

In implementations, AoA and/or AoD (e.g., sidelink AoA and/or sidelink AoD) per path measurement information to be requested and reported (e.g., requested by the AoA measurement request 814 and/or reported by the AoA measurement report 818) may include one or more of the following:
- Measured and computed AoA per path out of total of *N* paths, where the *N* reported AoA paths can be subject to UE capability. Furthermore, if the target-UE is able to determine the AoA for each receive path of multipaths, and the AoA for one or more of those multipaths is outside a configured range of as described above, the AoA for one or more paths outside this configured range may be dropped and only AoA paths within the configured range may be reported.
- In the case of sidelink AoD, the measured sidelink PRS RSRP/RSSI (and/or other related RSS metric) per path out of total of *M* paths may be reported, where the *M* reported sidelink AoD paths may be subject to UE capability. The sidelink PRS RSRP/RSSI (and/or other related RSS metric) can correspond to the sidelink PRS transmission from a specific antenna element and/or antenna panel from the initiator UE, e.g., the UE 104g. The AoD information (e.g., including TRP, panel, and/or antenna location) of the said specific antenna element and/or antenna panel may be determined with respect to an antenna reference point (ARP location) and TRP, panel, and/or antenna location of which both types of antenna locations may have an associated location uncertainty, which may also be signaled.
- Path delay information (e.g., indicated in time units) corresponding to each of the received paths, such as corresponding to *N* and/or *M* total paths. This may be indicated with respect (relative to) to the first arrival path or in absolute manner.
- Amplitude response of each of the received paths, such as corresponding to *N* and/or *M* total paths.
- LOS/NLOS indicator for each of the *N* and/or *M* total paths. The indicator may include binary (e.g., [0 (LOS), (1) NLOS]) values or soft indicator values, e.g., [0 (LOS), 0.1, 0.2, ..., 1 (NLOS)]. The classification of LOS/NLOS may be up to implementation. In alternative or additional implementations, the classification may be specified be based on hypothesis testing, machine learning techniques using feature extraction, based on root mean square (RMS) delay spread, amplitude, range estimates, etc. In an example implementation of LOS/NLOS classification based upon a threshold function (β), which may include a combination of several features such as signal standard deviation and mean, signal kurtosis, skewness, Rician K-factor, goodness of fit, where LOS/NLOS conditions may be specified in relation to the configured threshold.

In at least some implementations, the above per path information may also extend to timing-based measurements such as sidelink reference signal time difference (RSTD) and sidelink RTT measurements as well as existing sidelink RS and RSS measurements such as sidelink demodulation reference signal (DMRS), sidelink CSI-RS, PSBCH-RSRP, PSSCH-RSRP, and/or PSCCH-RSRP.

In additional or alternative implementations, a per-path indication of AoA measurements may extend across hybrid positioning measurements including across positioning techniques, e.g., sidelink TDOA, sidelink RTT, sidelink AoA, sidelink AoD, and/or across interfaces such as positioning measurements from both Uu and sidelink interfaces. In further additional or alternative implementations, a configuration entity (e.g., node network node and/or other device (e.g., UE)) may also provide an angular search window (such as described above) by taking into account the *a priori* per path information to adapt an angular search window length.

This disclosure also describes techniques to trigger, configure, and report the angle information including AoA and/or AoD in terms of the GCS and/or LCS. For instance, implementations include techniques for defining independent triggers (e.g., conditions) for transmitting respective coordinate system information. For example, the transmission of a location information message is configurable with a first periodicity parameter, and the transmission of an LCS-to-GCS translation information message is configurable with a second periodicity parameter. For instance, even when both parameters may be configured with an identical value, the periodicities can be configured separately and independently with different values.

Alternatively or additionally, the transmission of a location information message is triggered if the location information for a UE changes by more than one or more configured angular threshold(s) in one or more of the directions and/or one or more configured location information thresholds, e.g., a distance threshold, height threshold, etc. In another example, the transmission of a location information message is triggered upon initiation or expiration of a dedicated and configured timer. In yet another example the transmission of a location information message is triggered by an area change in which a UE is located or with respect to a previously reported UE location such as based on the radio environment characteristics. This example can be implemented as a function of the area ID, cell ID, beam IDs, etc.

In another example, the transmission of an LCS-to-GCS translation information message is triggered if the LCS-to-GCS translation information changes by more than one or more configured angular threshold(s) in one or more of the directions or one or more configured location information thresholds, e.g., distance threshold, height thresholds, etc. In another example, the transmission of an LCS-to-GCS translation information message is triggered upon initiation and/or expiration of a dedicated and configured timer. In yet another example the transmission of an LCS-to-GCS translation information message is triggered by an area change in which the UE is located and/or with respect to the previously reported location, such as based on radio environment characteristics. This can be as a function of the area ID, cell ID, beam IDs, etc. In at least some implementations, LCS-to-GCS translation information includes angles α (bearing angle), β (downtilt angle) and γ (slant angle) for the translation of an LCS to a GCS.

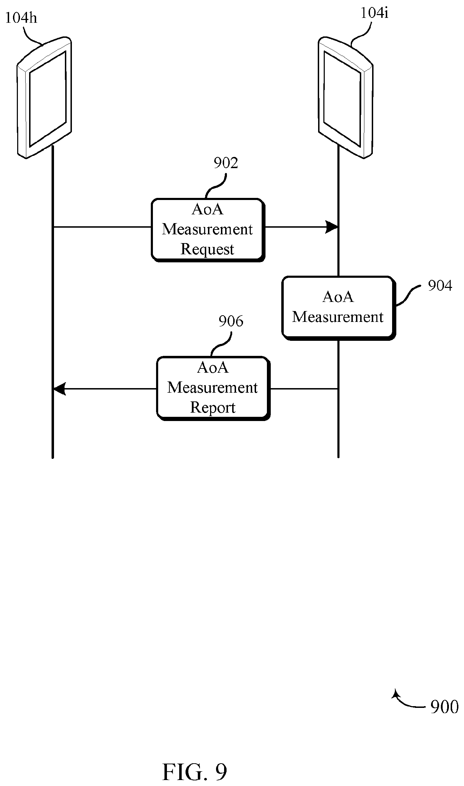

**FIG. 9** illustrates an example of a system 900 that supports wireless angle-based positioning in accordance with aspects of the present disclosure. The system 900, for instance, is implemented for LCS-to-GCS mapping procedures for AoA, such as sidelink AoA. In the system 900, a UE 104h transmits an AoA measurement request 902 to a target-UE 104i requesting AoA measurements, such as sidelink AoA measurements. In at least one implementation the AoA measurement request 902 requests azimuth of arrival and zenith of arrival information. The target-UE 104i receives the AoA measurement request 902 and performs AoA measurement 904 based at least in part on parameters of the AoA measurement request 902. The target-UE 104i generates an AoA measurement report 906 that includes AoA measurements generated as part of the AoA measurement 904, and transmits the AoA measurement report to the UE 104h. In at least one implementation, the target-UE 104i includes LCS-to-GCS translation parameters that are usable by the UE 104h to interpret AoA measurements included in the AoA measurement report 906.

The system 900 can be implemented with a number of different variations according to the present disclosure. For instance, the UE 104h may perform LCS-to-GCS translation in the event that AoA measurements (e.g., including measurement pair of azimuth and/or zenith of arrivals) are received in the AoA measurement report 906 in LCS format with respect to an LCS of the target-UE 104i. The target-UE 104i, for instance, may provide the LCS-to-GCS translation parameters which may include information such as angles α (bearing angle), β (downtilt angle), γ (slant angle), etc., for the translation of an LCS (e.g., LCS of the target-UE 104i) to a GCS.

In scenarios where the AoA measurement report 906 is not accompanied by or does not include LCS-to-GCS translation information, UE 104h can perform the LCS-to-GCS translation based on a previous and/or predefined (e.g., pre-configured) LCS-to-GCS translation information. For instance, UE 104h may perform the LCS-to-GCS translation based on the most recently received LCS-to-GCS translation information such as provided by the target-UE 104i. In an alternative or additional implementation, if the target-UE 104i does not include LCS-to-GCS translation information, the target-UE 104i may provide the AoA measurements in the AoA measurement report 906 based on a previous and/or predefined LCS-to-GCS translation information. For instance, the target-UE 104i can transmit the AoA measurements based on a most recently transmitted LCS-to-GCS translation information that the target-UE 104i has provided to the UE 104h.

The described implementations also provide techniques for configuring a common reference coordinate axis with respect to the mapping between an LCS and a GCS. For instance, the configured angle search windows described above may be based on the LCS or GCS information procedures discussed in these implementations, and optionally may depend on a particular configuration entity. Examples of the configuration entity, for example include a UE, RSU, anchor UE, sidelink capable device, gNB, LMF, etc.

In the context of sidelink positioning a UE may have different orientations at any given time in addition to the relative orientations and/or directions with respect to other UEs. Each of these orientations and/or directions are subject to independently change over time, e.g., due to translational and rotational mobility of a UE. For example, a centralized configuration entity such as a base station (e.g., gNB) and/or location server (LMF) may share an angle-based configuration based on the approximate absolute UE position according to either the LCS or GCS format. In scenarios where the angle-based information is shared in LCS format, additional processing may be implemented to map and/or translate the angle-based information to a GCS format, such as which serves as common reference axis for participating network entities and nodes in a positioning session, e.g., sidelink position session.

Transmitter information in the case of AoD and/or the measured angle at the receiver in the case of AoA with respect to the sidelink PRS transmission and/or reception, e.g., identified by one or more of sidelink PRS ID, ARP), boresight direction, antenna panel ID, etc., may be defined with respect to GCS and/or LCS. Examples of GCS and LCS as discussed herein include:
1. GCS: e.g., azimuth angle measured counter-clockwise from geographical North, elevation angle measured relative to zenith and positive to the horizontal direction (elevation 0 deg. points to zenith, 90 deg to the horizon).
2. LCS: e.g., azimuth angle is measured counter-clockwise from the x-axis of the LCS, elevation angle is measured relative to the z-axis of the LCS (elevation 0 deg. points to the z-axis, 90 deg to the x-y plane) together with a LCS to GCS translation information (e.g., using angles α (bearing angle), β (downtilt angle) and γ (slant angle) for the translation of a LCS to a GCS.

In at least some implementations, depending on the which entity performs the mapping, GCS and/or LCS configuration information may be transferred to a UE and/or other device, e.g., target-UE, initiator-UE, etc. The GCS and/or LCS configuration information may be associated with some identification information regarding which UE/device is providing such information, e.g., the GCS and/or LCS configuration information can be differentiated UE IDs, source-ID, destination-IDs, a positioning-specific higher-layer ID and/or lower-layer IDs, such as transmitted using SCI.

In at least some implementations, the location information and LCS-to-GCS translation information can be split into two distinct messages, e.g., same stage or different stage SCIs, different sidelink MAC CEs, different information elements (IEs) within a PC5-RRC or PC5-S message, a new SL positioning protocol (SLPP)), etc. For instance, a first message includes the location information and a second message includes the LCS-to-GCS translation information. In such scenarios, the respective messages may include a header information, e.g., a first header ID to denote a location information message and a second header ID to denote an LCS-to-GCS translation information message.

In alternative or additional implementations, a target-UE may perform the LCS-to-GCS mapping and report the AoA in the common reference GCS format. Such scenarios may introduce processing delay at the target-UE side, which may affect the reporting the latency of the angle-based measurement, e.g., AoA measurements.

In at least some implementations, the translation information can be divided based on horizontal and vertical translation information. For instance, the vertical location translation information may not vary or change as often as the horizontal location translation for land-based mobility, e.g., V2X. Thus, there may be corresponding header information for each of horizontal and vertical location translation information. Further, there may be independently configured thresholds, timers, or areas defined for each of horizontal and vertical location translation information.

In at least some of the aforementioned implementations, the relative and/or range estimates may be calculated at a UE and/or other device (e.g., initiator UE, anchor UE, RSU), and/or the relative and/or range estimates can be calculated at the target-UE. Further, in scenarios for absolute positioning, a central entity such as an LMF or co-located LMF in a gNB may perform the position computation. In at least some implementations, the requests may be triggered by the gNB and/or LMF.

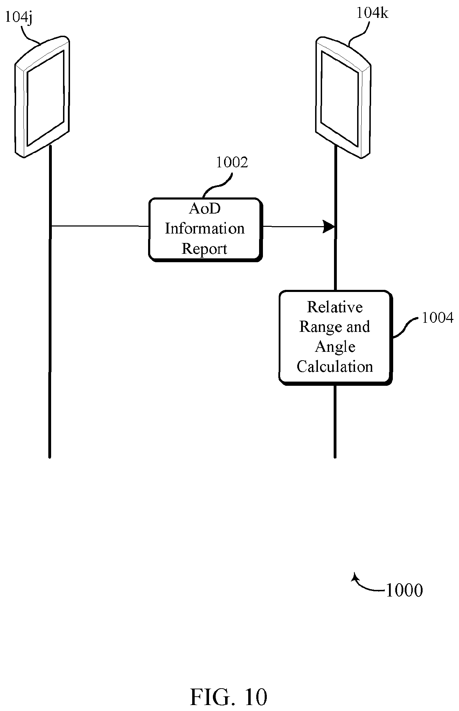

**FIG. 10** illustrates an example of a system 1000 that supports wireless angle-based positioning in accordance with aspects of the present disclosure. The system 1000, for instance, is implemented for sharing AoD (e.g., sidelink AoD)-related information. In the system 1000 a UE 104j transmits an AoD information report 1002 to a target-UE 104k. The AoD information report 1002 can include various AoD-related information, such as absolute location coordinates, ARP information, boresight information, LCS-to-GCS translation parameters (e.g., include angles α (bearing angle), β (downtilt angle), γ (slant angle), etc.) for the translation of an LCS to a GCS. In at least some of the aforementioned implementations, the relative and/or range estimates may be calculated at a device such as an initiator UE, anchor UE, RSU, target-UE, etc. In absolute position scenarios, the relative and/or range estimates may be calculated at a central entity such as an LMF and/or co-located LMF in gNB. In at least some implementations, the requests may be triggered by the gNB and/or LMF.

Accordingly, the target-UE 104k receives the AoD information report 1002 and performs relative range and angle calculation 1004 based on AoD information included in the AoD information report 1002. Further, the relative range and angle calculation 1004 may utilize RSRP and/or RSSI measurement of transmitted positioning reference signal resources from the UE 104j, e.g., a received resource set.

In at least some implementations, an expected angle search window and uncertainty may also be provided as part of the AoA measurement request 902 in the system 900, and/or as part of the AoA information report 1002 in the system 1000.

In at least some implementations the signaling in the systems 900, 1000 may be achieved by sidelink lower layer signaling (e.g., SCI, SL MAC-CE) and/or via higher layer (e.g., PC5 RRC, SL Positioning Protocol, PC5-S signaling) or combinations thereof. In scenarios that involve the Uu interface (e.g., involvement of gNB and/or LMF) to convey AoD and/or AoA information such as LCS-to-GCS translation information, signaling mechanisms such as RRC, LPP, system information blocks (SIBs) (e.g., broadcast signaling) may be used for the target-UE.

In alternative or additional implementations, a responder UE or target-UE may report the AoA and/or AoD-related measurements in conjunction with other positioning measurements such as SL RSTD, SL-RTT (e.g., one-way and/or two-way RTT) in a hybrid fashion. For example, the AoA angle pair of azimuth and zenith may be reported in conjunction with the RTT measurements and/or SL RSTD measurements.

In alternative or additional implementations, the AoD and AoA information may be computed and/or measured with respect to existing transmitted or received sidelink reference signals, e.g., sidelink synchronization signal block (S-SSB), SL DMRS, SL CSI-RS, SL Phase Tracking Reference Signal (PT-RS), etc. In extended alternative or additional implementations, a target-UE may also report a host of quality metrics associated with each AoD and/or AoA angle measurement or angle measurement pair, e.g., for both azimuth and zenith. Examples of quality metrics include angle uncertainty, confidence interval, direction accuracy, angle accuracy, angle accuracy with respect to the reference angle relative to an initiator device, etc.

Implementations are also described for a UE to report LCS information and LCS-to-GCS translation parameters based on different reporting behaviors. For instance, in at least one implementation of AoA, at time instances {t₁, t₂, ... tₙ} a target-UE may report the LCS information and translation information, such as when the overall orientation of the target-UE has not changed by a certain delta value. The delta value, for instance, can be configured by a configuration entity, e.g., base station, gNB, anchor-UE, initiator-UE, etc.

In at least one implementation for AoD, at time instances {t₁, t₂, ... tₙ} , a device (e.g., initiator-UE, RSU, anchor-UE, etc.) may report the LCS information and translation information to the target-UE, such as when the overall orientation of the UE has not changed by a certain delta value. The delta value, for instance, can be configured by a configuration entity, e.g., base station, gNB, anchor-UE, initiator-UE, etc.

In at least one implementation, based on the speed of the target-UE, the reporting periodicity of the LCS information and translation information may be adapted accordingly. For instance, the periodicity of {t₁, t₂, ... tₙ} can be configured to be sufficiently small and may be configurable to detect subtle changes in target-UE direction and/or orientation. Example time units for the periodicity include seconds, milliseconds (ms), nanoseconds (ns), etc.

In at least one implementation, there can be independent conditions and/or triggers for transmitting the respective information. For example, the transmission of a location information message (e.g., including LCS) is configurable with a first periodicity parameter, and the transmission of an LCS-to-GCS translation information message is configurable with a second periodicity parameter. In implementations both parameters may be configured with an identical value, the periodicities can alternatively or additionally be configured separately and independently with different values.

In at least one implementation, the reporting configuration of a location information message is configurable to enable the target-UE to report with a first periodicity parameter, and the transmission of an LCS-to-GCS translation information message is configurable to be reported with a second periodicity parameter. In implementations both parameters may be configured with an identical value, the periodicities can alternatively or additionally be configured separately and independently with different values.

Implementations also provide a defined GLCS for UEs and/or other devices sharing the same group local location information, e.g., a group of UEs located within the same area, on the same altitude and/or height, and/or moving in a coordinated fashion, such as for V2X platoons, convoys, etc. The GLCS may be triggered, configured, and follow the same reporting procedures as described in other implementations detailed throughout this disclosure.

In implementations the implement GLCS, UEs within a defined group performing sidelink positioning can transmit the SL-AoD information or report the SL-AoA information with respect to a configured GLCS that reflects the LCS of the all the UEs within a group when one or more of the following characteristics are met in terms of direction/orientation:
- The group of UEs are on the same horizontal plane
- The group of UEs have the same orientation relative to each other (e.g., a convoy or platoon of vehicles moving in the same direction along a highway)
- The UEs have the same capability in terms of supported SL positioning methods, antenna/panel implementations

In at least some such implementations, a GLCS may correspond to a designated 'leader UE' or 'Group head UE', which may be configured by a network and/or pre-configured. Examples of GLCS operation configuration may include dynamic indications to indicate orientation and/or direction changes, e.g., flags and/or fields indicating that the UE's relative direction and/or orientation changes or a GLCS group head UE and/or leader UE changes. Such implementations may be implemented using SL lower layer signaling (e.g., SCI, SL MAC-CE) and/or higher layer (e.g., PC5 RRC, SL Positioning Protocol, PC5-S signaling), or combinations thereof. Alternative or additional examples may include indications regarding the leader UE or Group UE configuration from higher layers, e.g., ProSe layer, V2X layer, application layer, etc. In at least some examples related to the aforementioned dynamic indications, the indications may also be indicated by the network (e.g., gNB using DL MAC-CE, RRC signaling) and/or by the LMF, e.g., using LPP signaling.

In at least one implementation, the GLCS may include angles that may be transformed from the LCS of each UE within the group to the GLCS. As such, translation information may also include modified angles α (bearing angle), β (downtilt angle) and γ (slant angle) specific to the group of UEs and that differ to GCS translation information described in other implementations herein. In additional or alternative implementations, LCS-to-GLCS translation parameters may be defined for UEs with different positioning capabilities and antenna orientations.

In an alternative implementation, UEs within a group may transmit SL-AoD information and/or report the SL-AoA information with respect to the GLCS based on a common zone ID and/or subzone ID, such as described with reference to FIG. 6. For instance, a group of UEs located within same zone ID subzone ID may also trigger the reporting of SL-AoD and/or SL-AoA angular information in GLCS format. A further indication or field may be signaled to UEs to indicate their respective orientations. For example, UEs which are on the same horizontal plane may report their front-facing orientation in terms of the geographic coordinate system, e.g., North, North-east, etc.

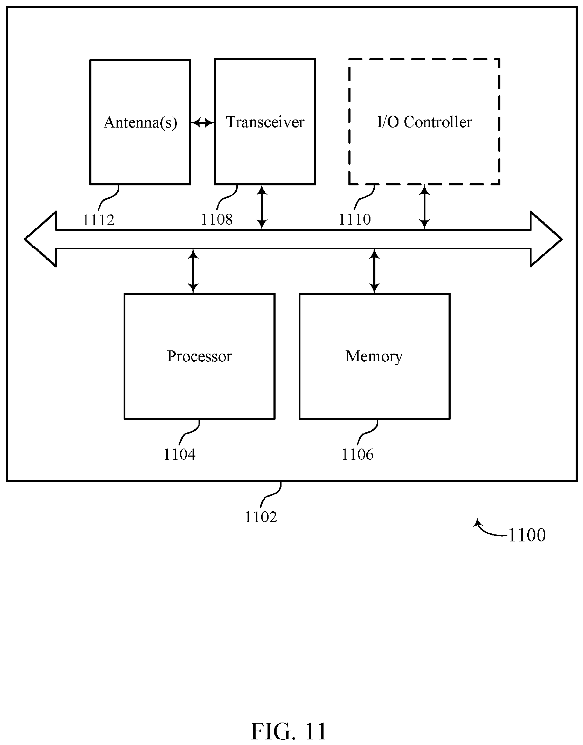

FIG. 11 illustrates an example of a block diagram 1100 of a device 1102 (e.g., an apparatus) that supports wireless angle-based positioning in accordance with aspects of the present disclosure. The device 1102 may be an example of UE 104 as described herein. The device 1102 may support wireless communication with one or more network entities 102, UEs 104, or any combination thereof. The device 1102 may include components for bi-directional communications including components for transmitting and receiving communications, such as a processor 1104, a memory 1106, a transceiver 1108, and an I/O controller 1110. These components may be in electronic communication or otherwise coupled (e.g., operatively, communicatively, functionally, electronically, electrically) via one or more interfaces (e.g., buses).

The processor 1104, the 1106, the transceiver 1108, or various combinations thereof or various components thereof may be examples of means for performing various aspects of the present disclosure as described herein. For example, the processor 1104, the 1106, the transceiver 1108, or various combinations or components thereof may support a method for performing one or more of the operations described herein.

In some implementations, the processor 1104, the 1106, the transceiver 1108, or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some implementations, the processor 1104 and the 1106 coupled with the processor 1104 may be configured to perform one or more of the functions described herein (e.g., executing, by the processor 1104, instructions stored in the 1106). In the context of UE 104, for example, the transceiver 1108 and the processor coupled 1104 coupled to the transceiver 1108 are configured to cause the UE 104 to perform the various described operations and/or combinations thereof.

For example, the processor 1104 and/or the transceiver 1108 may support wireless communication at the device 1102 in accordance with examples as disclosed herein. For instance, the processor 1104 and/or the transceiver 1108 may be configured as or otherwise support a means for receiving, at a UE, one or more positioning reference signals and angle-based configuration information including an expected search angle window based on the approximate location information for the UE; performing AoD mapping based at least in part on one or more positioning reference RSS measurements and one or more reduced search space AoA measurements based on the angle-based configuration information; generating a position measurement report based at least in part on the AoD mapping and the one or more AoA measurements; and computing a position estimate based at least in part on the AoD mapping and the one or more AoA measurements.

Further, in some implementations, the one or more positioning reference signals include one or more sidelink position reference signals, the angle-based configuration information includes sidelink angle-based configuration information, and the position measurement report includes a sidelink position measurement report; the angle-based configuration information includes uncertainty information for the expected search angle window and antenna location information for an antenna of an apparatus that transmits at least one of the one or more reference signals or the angle-based configuration information; the angle-based configuration information includes signal strength metrics for at least one of one or more azimuth angles or one or more zenith angles for one or more of AoD or AoA; the one or more positioning reference signals include multiple reference signals received over multiple receive paths, and operations further include: performing AoD mapping of the positioning reference signal RSS measurements for at least some receive paths of the multiple receive paths, and AoA measurements for at least some receive paths of the multiple receive paths; computing the position estimate based at least in part on the AoD mapping of the positioning reference signal RSS measurements and the one or more AoA measurements according to the some receive paths of the multiple receive paths; and generating the position measurement report to indicate the AoA measurements and SL RSS measurements based on the AoD mapping, according to the at least some receive paths of the multiple receive paths.

Further, in some implementations, one or more of a number of receive paths mapped for the AoD or a number of receive paths measured for the AoA measurements is based at least in part of a capability of the UE; one or more of the AoD measurements or the AoA measurements include, for each receive path of the multiple receive paths, at least one of path delay, amplitude response, or a LOS/non-LOS indicator; the position estimate may include one or more of an absolute position, a relative position, or a range including one or more of distance or direction; the RSS measurements may include one or more of a PRS reference signal received power (RSRP), PSBCH-RSRP, SSCH-RSRP, PSCCH-RSRP, sidelink RS-RSRP, or an RSSI indicator; the approximate location information for the UE is based on one or more of a previous a sidelink positioning session, enhanced cell ID (E-CID) position information, or sidelink E-CID position information.

Further, in some implementations, the approximate location information for the UE is based on one or more of a timing advance procedure to determine link round trip time (RTT), channel measurements, selected beams during initial access procedures, RSS measurements, network-based pathloss measurements, or sidelink-based pathloss measurements; the approximate location information for the UE is based on a subzone identifier to indicate a quadrant of a main zone identifier rectangular grid in which the UE is located relative to an apparatus that transmits at least one of the one or more positioning reference signals or the angle-based configuration information; the expected search angle window is based on one or more of: the approximate location information for the UE; a relative position of the UE; or a range value including one or more of a distance value or a direction value; one or more of the approximate location information for the UE, the relative position of the UE, or the range value is associated with an uncertainty value;

Further, in some implementations, the expected search angle window is configured for one or more of an expected azimuth AoA or an expected zenith AoA; the expected search angle window is configured for one or more of an expected azimuth AoD or an expected zenith AoD; the expected search angle window includes an uncertainty value and a timestamp; the angle-based configuration information includes one or more of a transmit receive point (TRP) location, a panel location, or an antenna location of a respective TRP, antenna element, or antenna panel that transmits the one or more reference signals and relative to an antenna reference point (ARP) location, and one or more of the TRP location, the panel location, the antenna location, or the ARP location is associated with a respective uncertainty value; further including transmitting the position measurement report to an apparatus that transmits at least one of the one or more positioning reference signals or the angle-based configuration information; the apparatus that transmits at least one of the one or more positioning reference signals or the angle-based configuration information includes one or more of a second UE, an RSU, an anchor UE, or a sidelink capable device.

In a further example, the processor 1104 and/or the transceiver 1108 may support wireless communication at the device 1102 in accordance with examples as disclosed herein. The processor 1104 and/or the transceiver 1108, for instance, may be configured as or otherwise support a means for receiving, at a UE, positioning reference signals and angle-based configuration information over multiple receive paths, the angle-based configuration information including an expected search angle window based on the approximate location information of the UE; performing AoD mapping based at least in part on positioning reference signal RSS measurements and reduced search space AoA measurements based on the angle-based configuration information; generating a position measurement report based at least in part on the AoD mapping of the positioning reference signal RSS measurements and the AoA measurements, where the position measurement report includes a set of positioning reference signal RSS measurements for a first set of receive paths of the multiple receive paths mapped to the AoD of a second UE that transmits one or more of the positioning reference signals or the angle-based configuration information, and a set of AoA measurements for a second set of receive paths of the multiple receive paths; and computing a position estimate based at least in part on the AoD mapping of the positioning reference signal RSS measurements and the one or more AoA measurements according to the at least some receive paths of the multiple receive paths.

Further, in some implementations, the first set of receive paths and the second set of receive paths include one or more common receive paths; one or more of a number of receive paths mapped for the AoD or a number of receive paths measured for the AoA measurements is based at least in part on a capability of the UE; one or more of: the AoD measurements for the first set of receive paths include, for each receive path of the first set of receive paths, at least one of path delay, amplitude response, or a LOS/non-LOS indicator; or the AoA measurements for the second set of receive paths include, for each receive path of the second set of receive paths, at least one of path delay, amplitude response, or a LOS/non-LOS indicator.

In a further example, the processor 1104 and/or the transceiver 1108 may support wireless communication at the device 1102 in accordance with examples as disclosed herein. The processor 1104 and/or the transceiver 1108, for instance, may be configured as or otherwise support a means for receiving, at a UE, one or more positioning reference signals and angle-based configuration information; detecting a trigger event to generate a position measurement report; performing AoD mapping of the one or more positioning reference signals based on LCS information and LCS-to-GCS translation information, and one or more AoA measurements based on the angle-based configuration information; computing a position estimate based at least in part on the AoD mapping and the one or more AoA measurements; and generating the position measurement report based at least in part on one or more of the position estimate, the AoD mapping, or the one or more AoA measurements.

Further, in some implementations, the one or more positioning reference signals include one or more sidelink position reference signals, the angle-based configuration information includes sidelink angle-based configuration information, and the position measurement report includes a sidelink position measurement report; the AoD mapping includes sidelink AoD mapping, and the AoA measurements include sidelink AoA measurements; the received angle-based configuration information includes the LCS information and the LCS-to-GCS translation information; operations further include transmitting the position measurement report to an apparatus that transmits at least one of the one or more positioning reference signals or the angle-based configuration information; to perform the AoD mapping of the one or more positioning reference signals, and operations further include performing distance and direction computation for the UE based on angles calculated in accordance with the GCS; the LCS-to-GCS translation information includes one or more of bearing angle, downtilt angle, or slant angle.

Further, in some implementations, operations further include performing the AoA measurements on the angle-based configuration information and based on the GCS; the angle-based configuration information includes sidelink AoD antenna information received from a transmitter device that transmits at least one of the one or more positioning reference signals or the angle-based configuration information; the trigger event includes one or more of an indication that the LCS information of the UE changes by more than a configured angular threshold, an initiation of a timer, an expiration of a timer, or an area change with respect to a previously reported location of the UE; at least one of the AoD mapping or the AoA measurements include one or more of: at least one azimuth angle or at least one zenith angle; the LCS-to-GCS translation information is preconfigured in the UE; at least one of the one or more positioning reference signals or the angle-based configuration information is received from a transmitter device, and the transmitter device includes at least one of a second UE, a RSU, an anchor UE, or a sidelink capable device.

Further, in some implementations, at least one of the angle-based configuration information or the LCS-GCS translation information is received via one or more of SCI, one or more sidelink MAC CE, PC5 RRC information, PC5 signaling, or via a SLPP; further including reporting the LCS information and the LCS-to-GCS translation information according to a configured periodicity; the UE is a member of a group associated with a GLCS defined to be common reference axes for devices that are members of the group, and operations further include: determining a further position estimate of the UE relative to the GLCS; and reporting the further position estimate of the UE relative to the GLCS to one or more other devices that are members of the group.

In a further example, the processor 1104 and/or the transceiver 1108 may support wireless communication at the device 1102 in accordance with examples as disclosed herein. The processor 1104 and/or the transceiver 1108, for instance, may be configured as or otherwise support a means for determining an estimated position of a UE based on a GLCS for a group of devices that share common group location information; and transmitting the estimated position of the UE to one or more other devices that are members of the group of devices.

Further, in some implementations, transmitting the estimated position of the UE includes determining that a condition applies, the condition including one or more of that: the one or more other devices are on a same horizontal plane with the UE; the one or more other devices have a same orientation relative to the UE; or the one or more other devices have a same positioning capability as the UE; the GLCS is based at least in part on a designated leader device of the group of devices; determining the estimated position of the UE includes translating a LCS of the UE to the GLCS.

The processor 1104 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some implementations, the processor 1104 may be configured to operate a memory array using a memory controller. In some other implementations, a memory controller may be integrated into the processor 1104. The processor 1104 may be configured to execute computer-readable instructions stored in a memory (e.g., the 1106) to cause the device 1102 to perform various functions of the present disclosure.

The 1106 may include random access memory (RAM) and read-only memory (ROM). The 1106 may store computer-readable, computer-executable code including instructions that, when executed by the processor 1104 cause the device 1102 to perform various functions described herein. The code may be stored in a non-transitory computer-readable medium such as system memory or another type of memory. In some implementations, the code may not be directly executable by the processor 1104 but may cause a computer (e.g., when compiled and executed) to perform functions described herein. In some implementations, the 1106 may include, among other things, a basic I/O system (BIOS) which may control basic hardware or software operation such as the interaction with peripheral components or devices.

The I/O controller 1110 may manage input and output signals for the device 1102. The I/O controller 1110 may also manage peripherals not integrated into the device M02. In some implementations, the I/O controller 1110 may represent a physical connection or port to an external peripheral. In some implementations, the I/O controller 1110 may utilize an operating system such as iOS^{®}, ANDROID^{®}, MS-DOS^{®}, MS-WINDOWS^{®}, OS/2^{®}, UNIX^{®}, LINUX^{®}, or another known operating system. In some implementations, the I/O controller 1110 may be implemented as part of a processor, such as the processor M011. In some implementations, a user may interact with the device 1102 via the I/O controller 1110 or via hardware components controlled by the I/O controller 1110.

In some implementations, the device 1102 may include a single antenna 1112. However, in some other implementations, the device 1102 may have more than one antenna 1112 (i.e., multiple antennas), including multiple antenna panels or antenna arrays, which may be capable of concurrently transmitting or receiving multiple wireless transmissions. The transceiver 1108 may communicate bi-directionally, via the one or more antennas 1112, wired, or wireless links as described herein. For example, the transceiver 1108 may represent a wireless transceiver and may communicate bi-directionally with another wireless transceiver. The transceiver 1108 may also include a modem to modulate the packets, to provide the modulated packets to one or more antennas 1112 for transmission, and to demodulate packets received from the one or more antennas 1112.

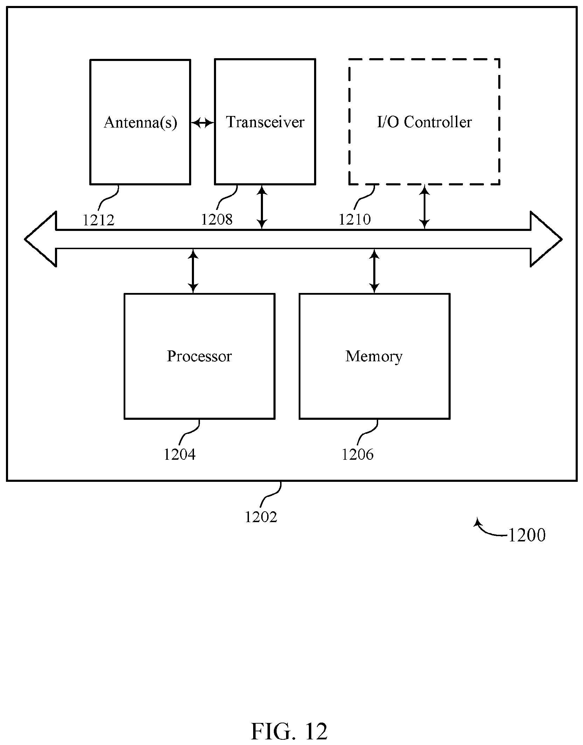

FIG. 12 illustrates an example of a block diagram 1200 of a device 1202 (e.g., an apparatus) that supports wireless angle-based positioning in accordance with aspects of the present disclosure. The device 1202 may be an example of a UE 104 and/or a network entity 102 as described herein. The device 1202 may support wireless communication with one or more network entities 102, UEs 104, or any combination thereof. The device 1202 may include components for bi-directional communications including components for transmitting and receiving communications, such as a processor 1204, a memory 1206, a transceiver 1208, and an I/O controller 1210. These components may be in electronic communication or otherwise coupled (e.g., operatively, communicatively, functionally, electronically, electrically) via one or more interfaces (e.g., buses).

The processor 1204, the memory 1206, the transceiver 1208, or various combinations thereof or various components thereof may be examples of means for performing various aspects of the present disclosure as described herein. For example, the processor 1204, the memory 1206, the transceiver 1208, or various combinations or components thereof may support a method for performing one or more of the operations described herein.

In some implementations, the processor 1204, the memory 1206, the transceiver 1208, or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some implementations, the processor 1204 and the memory 1206 coupled with the processor 1204 may be configured to perform one or more of the functions described herein (e.g., executing, by the processor 1204, instructions stored in the memory 1206). In the context of network entity 102, for example, the transceiver 1208 and the processor 1204 coupled to the transceiver 1208 are configured to cause the network entity 102 to perform the various described operations and/or combinations thereof.

For example, the processor 1204 and/or the transceiver 1208 may support wireless communication at the device 1202 in accordance with examples as disclosed herein. For instance, the processor 1204 and/or the transceiver 1208 may be configured as or otherwise support a means for transmitting, to a target UE, one or more positioning reference signals and angle-based configuration information including an expected search angle window based on the approximate location information of the target UE; and receive, from the target UE, a position measurement report based at least in part on AoD mapping of one or more positioning reference RSS measurements and a reduced search space AoA measurement using the angle-based configuration information.

Further, in some implementations, the angle-based configuration information includes uncertainty information for the expected search angle window and antenna location information for an antenna of the apparatus; the angle-based configuration information includes received signal strength metrics for at least one of: one or more azimuth angles or one or more zenith angles for one or more of AoD or AoA; further including transmitting, to the target UE, a request for position measurements for multiple different receive paths at the target UE; the position measurement report includes AoD measurements for a first set of receive paths, and AoA measurements for a second set of receive paths; the first set of receive paths and the second set of receive paths include one or more common receive paths; one or more of: the AoD measurements for the first set of receive paths include, for each receive path of the first set of receive paths, at least one of path delay, amplitude response, or a LOS/non-LOS indicator; or the AoA measurements for the second set of receive paths include, for each receive path of the second set of receive paths, at least one of path delay, amplitude response, or a LOS/non-LOS indicator.

Further, in some implementations, the approximate location information for the target UE is based on one or more of a previous a sidelink positioning session, E-CID position information, or sidelink E-CID position information; the approximate location information for the target UE is based on one or more of a timing advance procedure to determine link RTT, channel measurements, selected beams during initial access procedures, RSS measurements, network-based pathloss measurements, or sidelink-based pathloss measurements; the approximate location information for the target UE is based on a subzone identifier to indicate a quadrant of a main zone identifier rectangular grid in which the target UE is located with respect to an apparatus that performs the transmitting, to a target UE, the one or more positioning reference signals and the angle-based configuration information; the expected search angle window is based on one or more of: the approximate location information for the target UE; a relative position of the target UE; or a range value including one or more of a distance value or a direction value.

Further, in some implementations, one or more of the approximate location information for the target UE, the relative position of the target UE, or the range value is associated with an uncertainty value; the expected search angle window is configured for one or more of an expected azimuth AoA or an expected zenith AoA; the expected search angle window is configured for one or more of an expected azimuth AoD or an expected zenith AoD; the expected search angle window includes an uncertainty value and a timestamp; the angle-based configuration information includes one or more of a TRP location, a panel location, or an antenna location of a respective TRP, antenna element, or antenna panel that transmits the one or more reference signals and with respect to an ARP location, and one or more of the TRP location, the panel location, the antenna location, or the ARP location is associated with a respective uncertainty value; an apparatus that performs the transmitting, to the target UE, the one or more positioning reference signals and the angle-based configuration information includes at least one of a different UE that supports determining a position of the target UE or a network apparatus that supports determining a position of the target UE; the apparatus includes at least one of a second UE, a RSU, an anchor UE, or a sidelink capable device.

In a further example, the processor 1204 and/or the transceiver 1208 may support wireless communication at the device 1202 in accordance with examples as disclosed herein. The processor 1204 and/or the transceiver 1208, for instance, may be configured as or otherwise support a means for transmitting, to a target UE, one or more positioning reference signals and angle-based configuration information; and receiving, from the target UE, a position measurement report generated based at least in part on AoD mapping of the one or more positioning reference signals based on LCS information and LCS-to-GCS translation information, and one or more AoA measurements based on the angle-based configuration information.

Further, in some implementations, the one or more positioning reference signals include one or more sidelink position reference signals, the angle-based configuration information includes sidelink angle-based configuration information, and the position measurement report includes a sidelink position measurement report; further including transmitting, to the UE, the LCS information and the LCS-to-GCS translation information; the LCS-to-GCS translation information includes one or more of bearing angle, downtilt angle, or slant angle; the angle-based configuration information includes sidelink AoD antenna information for an antenna of an apparatus that performs the transmitting and the receiving; operations further include transmitting, to the target UE, information for a trigger event to generate the position measurement report; the information for the trigger event includes one or more of an indication that the LCS information of the UE changes by more than a configured angular threshold, an initiation of a timer, an expiration of a timer, or an area change with respect to a previously reported location of the UE.

Further, in some implementations, at least one of the AoD mapping or the AoA measurements include one or more of: at least one azimuth angle or at least one zenith angle; an apparatus that performs the transmitting and the receiving includes at least one of a second UE, an RSU, an anchor UE, or a sidelink capable device; further including transmitting, to the UE, at least one of the angle-based configuration information or the LCS-GCS translation information via one or more of SCI, one or more sidelink MAC CE, PC5 RRC information, PC5 signaling, or via a SLPP; further including generating the LCS-to-GCS translation information; further including transmitting one or more of the LCS information or the LCS-to-GCS translation information according to a configured periodicity.

The processor 1204 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some implementations, the processor 1204 may be configured to operate a memory array using a memory controller. In some other implementations, a memory controller may be integrated into the processor 1204. The processor 1204 may be configured to execute computer-readable instructions stored in a memory (e.g., the memory 1206) to cause the device 1202 to perform various functions of the present disclosure.

The memory 1206 may include random access memory (RAM) and read-only memory (ROM). The memory 1206 may store computer-readable, computer-executable code including instructions that, when executed by the processor 1204 cause the device 1202 to perform various functions described herein. The code may be stored in a non-transitory computer-readable medium such as system memory or another type of memory. In some implementations, the code may not be directly executable by the processor 1204 but may cause a computer (e.g., when compiled and executed) to perform functions described herein. In some implementations, the memory 1206 may include, among other things, a basic I/O system (BIOS) which may control basic hardware or software operation such as the interaction with peripheral components or devices.

The I/O controller 1210 may manage input and output signals for the device 1202. The I/O controller 1210 may also manage peripherals not integrated into the device M02. In some implementations, the I/O controller 1210 may represent a physical connection or port to an external peripheral. In some implementations, the I/O controller 1210 may utilize an operating system such as iOS^{®}, ANDROID^{®}, MS-DOS^{®}, MS-WINDOWS^{®}, OS/2^{®}, UNIX^{®}, LINUX^{®}, or another known operating system. In some implementations, the I/O controller 1210 may be implemented as part of a processor, such as the processor M06. In some implementations, a user may interact with the device 1202 via the I/O controller 1210 or via hardware components controlled by the I/O controller 1210.

In some implementations, the device 1202 may include a single antenna 1212. However, in some other implementations, the device 1202 may have more than one antenna 1212 (i.e., multiple antennas), including multiple antenna panels or antenna arrays, which may be capable of concurrently transmitting or receiving multiple wireless transmissions. The transceiver 1208 may communicate bi-directionally, via the one or more antennas 1212, wired, or wireless links as described herein. For example, the transceiver 1208 may represent a wireless transceiver and may communicate bi-directionally with another wireless transceiver. The transceiver 1208 may also include a modem to modulate the packets, to provide the modulated packets to one or more antennas 1212 for transmission, and to demodulate packets received from the one or more antennas 1212.

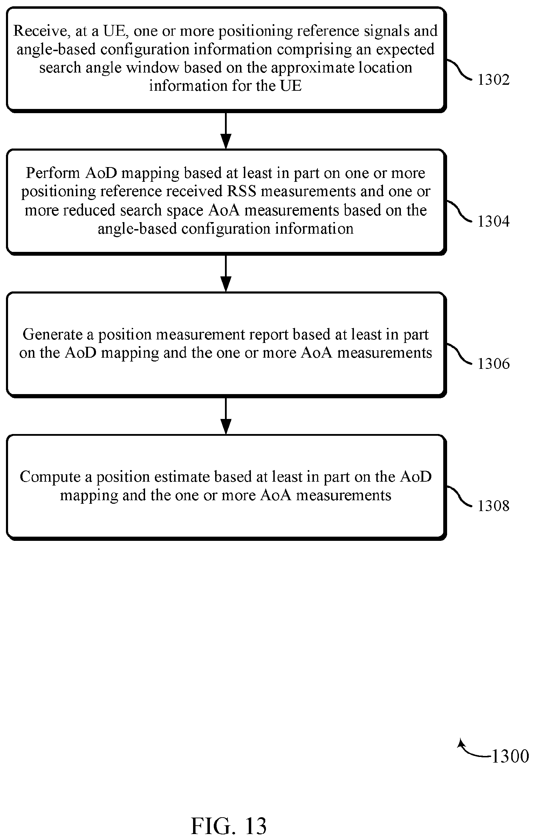

FIG. 13 illustrates a flowchart of a method 1300 that supports wireless angle-based positioning in accordance with aspects of the present disclosure. The operations of the method 1300 may be implemented by a device or its components as described herein. For example, the operations of the method 1300 may be performed by a UE 104 as described with reference to FIGs. 1 through 12. In some implementations, the device may execute a set of instructions to control the function elements of the device to perform the described functions. Additionally, or alternatively, the device may perform aspects of the described functions using special-purpose hardware.

At 1302, the method may include receiving, at a UE, one or more positioning reference signals and angle-based configuration information comprising an expected search angle window based on the approximate location information for the UE. The operations of 1302 may be performed in accordance with examples as described herein. In some implementations, aspects of the operations of 1302 may be performed by a device as described with reference to FIG. 1.

At 1304, the method may include performing AoD mapping based at least in part on one or more positioning reference received RSS measurements and one or more reduced search space AoA measurements based on the angle-based configuration information. The operations of 1304 may be performed in accordance with examples as described herein. In some implementations, aspects of the operations of 1304 may be performed by a device as described with reference to FIG. 1.

At 1306, the method may include generating a position measurement report based at least in part on the AoD mapping and the one or more AoA measurements. The operations of 1306 may be performed in accordance with examples as described herein. In some implementations, aspects of the operations of 1306 may be performed by a device as described with reference to FIG. 1.

At 1308, the method may include computing a position estimate based at least in part on the AoD mapping and the one or more AoA measurements. The operations of 1308 may be performed in accordance with examples as described herein. In some implementations, aspects of the operations of 13013 may be performed by a device as described with reference to FIG. 1.

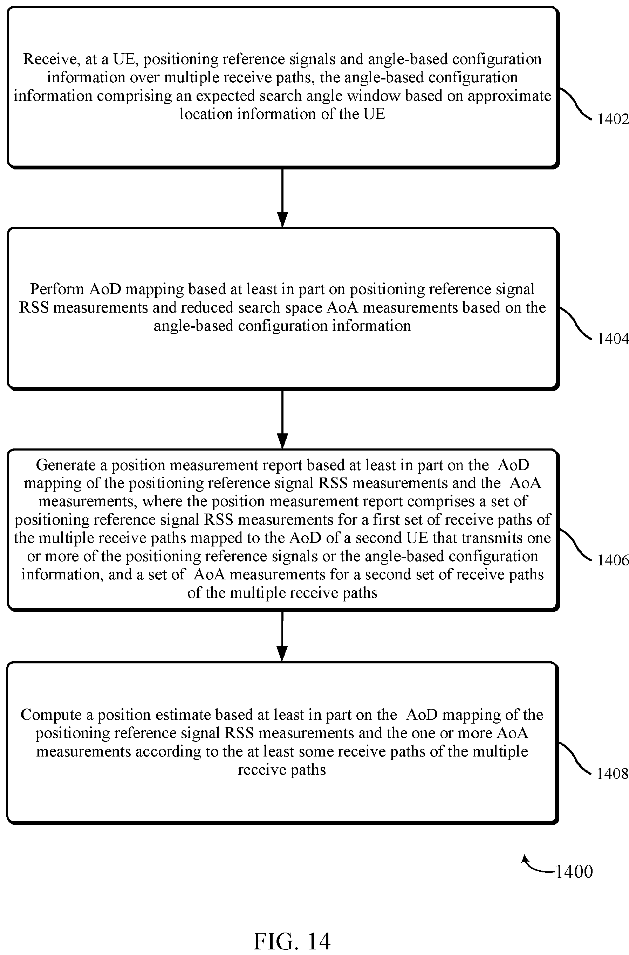

FIG. 14 illustrates a flowchart of a method 1400 that supports wireless angle-based positioning in accordance with aspects of the present disclosure. The operations of the method 1400 may be implemented by a device or its components as described herein. For example, the operations of the method 1400 may be performed by a UE 104 as described with reference to FIGs. 1 through 12. In some implementations, the device may execute a set of instructions to control the function elements of the device to perform the described functions. Additionally, or alternatively, the device may perform aspects of the described functions using special-purpose hardware.

At 1402, the method may include receiving, at a UE, positioning reference signals and angle-based configuration information over multiple receive paths, the angle-based configuration information comprising an expected search angle window based on approximate location information of the UE. The operations of 1402 may be performed in accordance with examples as described herein. In some implementations, aspects of the operations of 1402 may be performed by a device as described with reference to FIG. 1.

At 1404, the method may include performing AoD mapping based at least in part on positioning reference signal RSS measurements and reduced search space AoA measurements based on the angle-based configuration information. The operations of 1404 may be performed in accordance with examples as described herein. In some implementations, aspects of the operations of 1404 may be performed by a device as described with reference to FIG. 1.

At 1406, the method may include generating a position measurement report based at least in part on the AoD mapping of the positioning reference signal RSS measurements and the AoA measurements, where the position measurement report comprises a set of positioning reference signal RSS measurements for a first set of receive paths of the multiple receive paths mapped to the AoD of a second UE that transmits one or more of the positioning reference signals or the angle-based configuration information, and a set of AoA measurements for a second set of receive paths of the multiple receive paths. The operations of 1406 may be performed in accordance with examples as described herein. In some implementations, aspects of the operations of 1406 may be performed by a device as described with reference to FIG. 1.

At 1408, the method may include computing a position estimate based at least in part on the AoD mapping of the positioning reference signal RSS measurements and the one or more AoA measurements according to the at least some receive paths of the multiple receive paths. The operations of 1408 may be performed in accordance with examples as described herein. In some implementations, aspects of the operations of 14014 may be performed by a device as described with reference to FIG. 1.

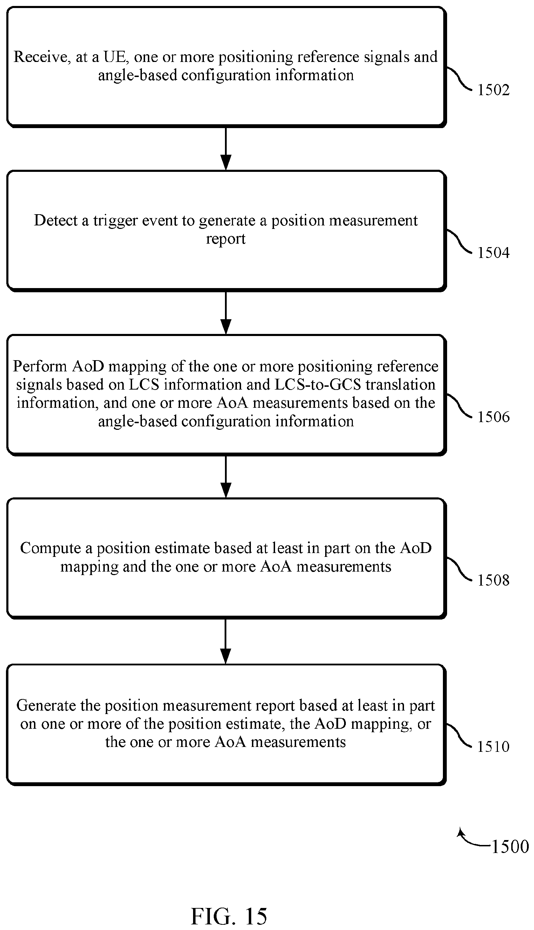

FIG. 15 illustrates a flowchart of a method 1500 that supports wireless angle-based positioning in accordance with aspects of the present disclosure. The operations of the method 1500 may be implemented by a device or its components as described herein. For example, the operations of the method 1500 may be performed by a UE 104 as described with reference to FIGs. 1 through 12. In some implementations, the device may execute a set of instructions to control the function elements of the device to perform the described functions. Additionally, or alternatively, the device may perform aspects of the described functions using special-purpose hardware.

At 1502, the method may include receiving, at a UE, one or more positioning reference signals and angle-based configuration information. The operations of 1502 may be performed in accordance with examples as described herein. In some implementations, aspects of the operations of 1502 may be performed by a device as described with reference to FIG. 1.

At 1504, the method may include detecting a trigger event to generate a position measurement report. The operations of 1504 may be performed in accordance with examples as described herein. In some implementations, aspects of the operations of 1504 may be performed by a device as described with reference to FIG. 1.

At 1506, the method may include performing AoD mapping of the one or more positioning reference signals based on LCS information and LCS-to-GCS translation information, and one or more AoA measurements based on the angle-based configuration information. The operations of 1506 may be performed in accordance with examples as described herein. In some implementations, aspects of the operations of 1506 may be performed by a device as described with reference to FIG. 1.

At 1508, the method may include computing a position estimate based at least in part on the AoD mapping and the one or more AoA measurements. The operations of 1508 may be performed in accordance with examples as described herein. In some implementations, aspects of the operations of 15015 may be performed by a device as described with reference to FIG. 1.

At 1510, the method may include generating the position measurement report based at least in part on one or more of the position estimate, the AoD mapping, or the one or more AoA measurements. The operations of 1510 may be performed in accordance with examples as described herein. In some implementations, aspects of the operations of 1510 may be performed by a device as described with reference to FIG. 1.

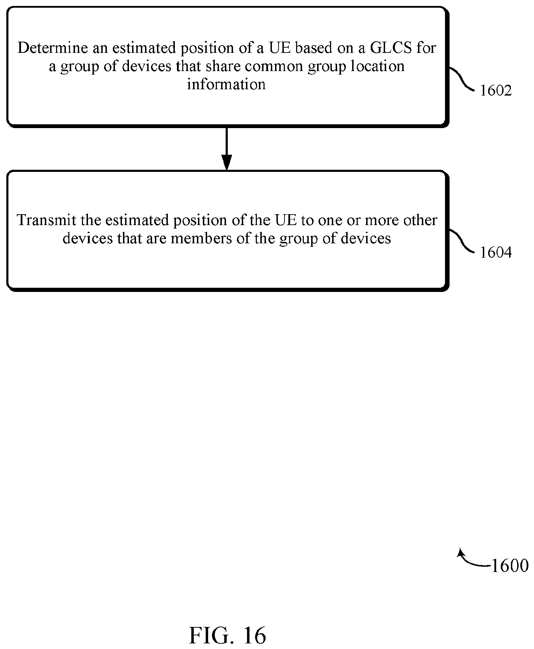

FIG. 16 illustrates a flowchart of a method 1600 that supports wireless angle-based positioning in accordance with aspects of the present disclosure. The operations of the method 1600 may be implemented by a device or its components as described herein. For example, the operations of the method 1600 may be performed by a UE 104 as described with reference to FIGs. 1 through 12. In some implementations, the device may execute a set of instructions to control the function elements of the device to perform the described functions. Additionally, or alternatively, the device may perform aspects of the described functions using special-purpose hardware.

At 1602, the method may include determining an estimated position of a UE based on a GLCS for a group of devices that share common group location information. The operations of 1602 may be performed in accordance with examples as described herein. In some implementations, aspects of the operations of 1602 may be performed by a device as described with reference to FIG. 1.

At 1604, the method may include transmitting the estimated position of the UE to one or more other devices that are members of the group of devices. The operations of 1604 may be performed in accordance with examples as described herein. In some implementations, aspects of the operations of 1604 may be performed by a device as described with reference to FIG. 1.

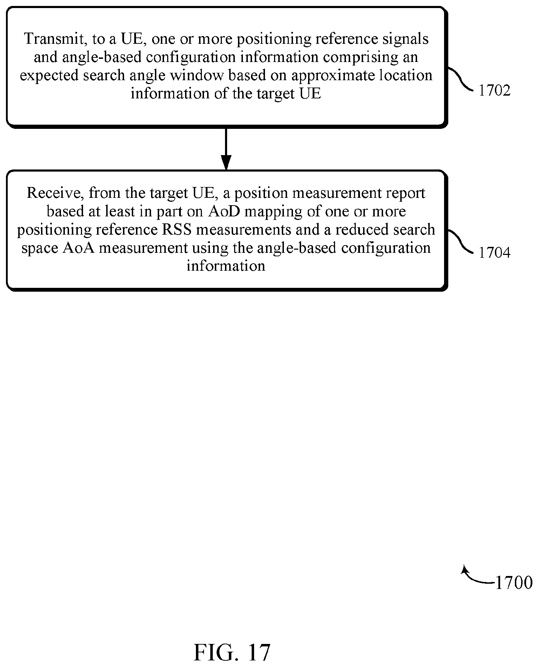

FIG. 17 illustrates a flowchart of a method 1700 that supports wireless angle-based positioning in accordance with aspects of the present disclosure. The operations of the method 1700 may be implemented by a device or its components as described herein. For example, the operations of the method 1700 may be performed by a UE 104 and/or a network entity 102 as described with reference to FIGs. 1 through 12. In some implementations, the device may execute a set of instructions to control the function elements of the device to perform the described functions. Additionally, or alternatively, the device may perform aspects of the described functions using special-purpose hardware.

At 1702, the method may include transmitting, to a UE, one or more positioning reference signals and angle-based configuration information comprising an expected search angle window based on approximate location information of the target UE. The operations of 1702 may be performed in accordance with examples as described herein. In some implementations, aspects of the operations of 1702 may be performed by a device as described with reference to FIG. 1.

At 1704, the method may include receiving, from the target UE, a position measurement report based at least in part on AoD mapping of one or more positioning reference RSS measurements and a reduced search space AoA measurement using the angle-based configuration information. The operations of 1704 may be performed in accordance with examples as described herein. In some implementations, aspects of the operations of 1704 may be performed by a device as described with reference to FIG. 1.

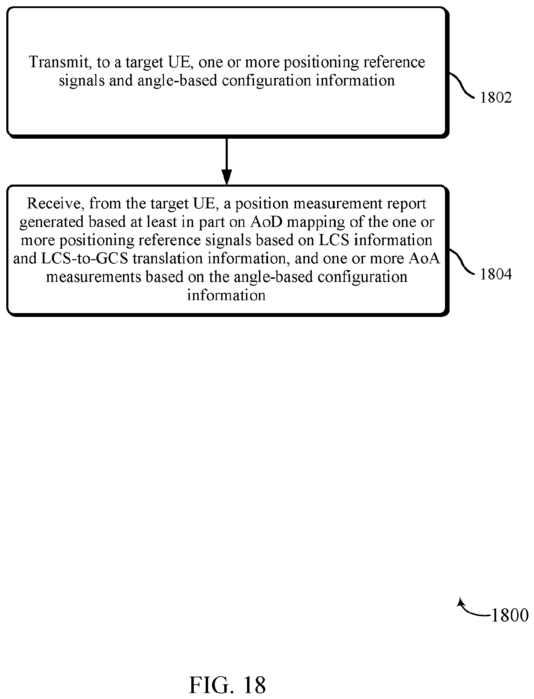

FIG. 18 illustrates a flowchart of a method 1800 that supports wireless angle-based positioning in accordance with aspects of the present disclosure. The operations of the method 1800 may be implemented by a device or its components as described herein. For example, the operations of the method 1800 may be performed by a UE 104 and/or a network entity 102 as described with reference to FIGs. 1 through 12. In some implementations, the device may execute a set of instructions to control the function elements of the device to perform the described functions. Additionally, or alternatively, the device may perform aspects of the described functions using special-purpose hardware.

At 1802, the method may include transmitting, to a target UE, one or more positioning reference signals and angle-based configuration information. The operations of 1802 may be performed in accordance with examples as described herein. In some implementations, aspects of the operations of 1802 may be performed by a device as described with reference to FIG. 1.

At 1804, the method may include receiving, from the target UE, a position measurement report generated based at least in part on AoD mapping of the one or more positioning reference signals based on LCS information and LCS-to-GCS translation information, and one or more AoA measurements based on the angle-based configuration information. The operations of 1804 may be performed in accordance with examples as described herein. In some implementations, aspects of the operations of 1804 may be performed by a device as described with reference to FIG. 1.

It should be noted that the methods described herein describes possible implementations, and that the operations and the steps may be rearranged or otherwise modified and that other implementations are possible. Further, aspects from two or more of the methods may be combined.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration.

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special-purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor.

Any connection may be properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of" or "one or both of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on. Further, as used herein, including in the claims, a "set" may include one or more elements.

The terms "transmitting," "receiving," or "communicating," when referring to a network entity, may refer to any portion of a network entity (e.g., a base station, a CU, a DU, a RU) of a RAN communicating with another device (e.g., directly or via one or more other network entities).

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form to avoid obscuring the concepts of the described example.

## Claims

1. A user equipment, UE, (104, 1102) for wireless communication, the UE (104, 1102) comprising:
at least one memory (1106); and
at least one processor (1104) coupled with the at least one memory (1106) and configured to cause the UE (104, 1102) to:
receive local coordinate system, LCS, information and LCS-to-global coordinate system, GCS, translation information, wherein at least one of the LCS information or the LCS-GCS translation information is received via a sidelink positioning protocol, SLPP;
receive a request (902) to generate a sidelink angle of arrival, AoA, position measurement report;
perform one or more sidelink AoA measurements (904) of sidelink signals from another UE (104);
generate the sidelink AoA position measurement report (906) based at least in part on the one or more sidelink AoA measurements; and
transmit the sidelink AoA position measurement report (906), wherein the one or more sidelink AoA measurements are provided in the AoA position measurement report (906) in LCS format with respect to an LCS of the UE (104, 1102) or the one or more sidelink AoA measurements are provided in the AoA position measurement report (906) in GCS format based on the received LCS-to-GCS translation information.

2. The UE (104, 1102) of claim 1, wherein the at least one processor (1104) is configured to cause the UE (104, 1102) to transmit the sidelink AoA position measurement report to an apparatus from which the request (902) to generate a sidelink AoA position measurement report is received.

3. The UE (104, 1102) of claim 1, wherein the AoA LCS-to-GCS translation information comprises one or more of bearing angle, downtilt angle, or slant angle.

4. The UE (104, 1102) of claim 1, wherein the one or more sidelink AoA measurements comprise at least one of at least one azimuth angle or at least one zenith angle.

5. The UE (104, 1102) of claim 1, wherein the UE (104, 1102) is a member of a group associated with a group local coordinate system, GLCS, defined to be common reference axes for devices that are members of the group, and wherein the at least one processor (1104) is configured to cause the UE (104, 1102) to:
determine a further position estimate of the UE (104, 1102) relative to the GLCS; and
report the further position estimate of the UE (104, 1102) relative to the GLCS to one or more other devices that are members of the group.

6. A method performed by a user equipment, UE, (104, 1102), the method comprising:
receiving local coordinate system, LCS, information and LCS-to-global coordinate system, GCS, translation information, wherein at least one of the LCS information or the LCS-GCS translation information is received via a sidelink positioning protocol, SLPP;
receiving a request (902) to generate a sidelink angle of arrival, AoA, position measurement report;
performing one or more sidelink AoA measurements (904) of sidelink signals from another UE (104);
generating the sidelink AoA position measurement report (906) based at least in part on the one or more sidelink AoA measurements; and
transmitting the sidelink AoA position measurement report (906), wherein the one or more sidelink AoA measurements are provided in the AoA position measurement report (906) in LCS format with respect to an LCS of the UE (104, 1102) or the one or more sidelink AoA measurements are provided in the AoA position measurement report (906) in GCS format based on the received LCS-to-GCS translation information.

7. A processor (1104) for a user equipment, UE, (104, 1102) for wireless communication, the processor (1104) being configured to:
receive local coordinate system, LCS, information and LCS-to-global coordinate system, GCS, translation information, wherein at least one of the LCS information or the LCS-GCS translation information is received via a sidelink positioning protocol, SLPP;
receive a request (902) to generate a sidelink angle of arrival, AoA, position measurement report;
perform one or more sidelink AoA measurements (904) of sidelink signals from another UE (104);
generate the sidelink AoA position measurement report (906) based at least in part on the one or more sidelink AoA measurements; and
transmit the sidelink AoA position measurement report (906), wherein the one or more sidelink AoA measurements are provided in the AoA position measurement report (906) in LCS format with respect to an LCS of the UE (104, 1102) or the one or more sidelink AoA measurements are provided in the AoA position measurement report (906) in GCS format based on the received LCS-to-GCS translation information.

8. An apparatus (102, 1202) for wireless communication, comprising:
at least one memory (1206); and
at least one processor (1204) coupled with the at least one memory (1206) and configured to cause the apparatus (102, 1202) to:
transmit, to a user equipment, UE, (104, 1102), local coordinate system, LCS, information and LCS-to-global coordinate system, GCS, translation information, wherein at least one of the LCS information or the LCS-GCS translation information is transmitted via a sidelink positioning protocol, SLPP;
transmit, to the UE (104, 1102), a request (902) to generate a sidelink angle of arrival, AoA, position measurement report for sidelink AoA position measurements of sidelink signals from another UE (104); and
receive sidelink AoA position measurement report (906) for sidelink AoA position measurements of sidelink signals from another UE (104) from the UE (104, 1102), wherein one or more sidelink AoA measurements are provided in the AoA position measurement report (906) in LCS format with respect to an LCS of the UE (104, 1102) or the one or more sidelink AoA measurements are provided in the AoA position measurement report (906) in GCS format based on the LCS-to-GCS translation information.

9. A method performed by an apparatus (102, 1202), the method comprising:
transmitting, to a user equipment, UE, (104, 1102), local coordinate system, LCS, information and LCS-to-global coordinate system, GCS, translation information, wherein at least one of the LCS information or the LCS-GCS translation information is transmitted via a sidelink positioning protocol, SLPP;
transmitting, to the UE (104, 1102), a request (902) to generate a sidelink angle of arrival, AoA, position measurement report for sidelink AoA position measurements of sidelink signals from another UE (104); and
receiving an AoA position measurement report (906) for sidelink AoA position measurements of sidelink signals from another UE (104) from the UE (104, 1102), wherein one or more sidelink AoA measurements are provided in the AoA position measurement report (906) in LCS format with respect to an LCS of the UE (104, 1102) or the one or more sidelink AoA measurements are provided in the AoA position measurement report (906) in GCS format based on the LCS-to-GCS translation information.

## Patentansprüche

1. Endgerät (104, 1102) zur drahtlosen Kommunikation, wobei das Endgerät (104, 1102) umfasst:
wenigstens einen Speicher (1106); und
wenigstens einen Prozessor (1104), gekoppelt mit dem wenigstens einen Speicher (1106) und ausgebildet zum Veranlassen des Endgeräts (104, 1102) zum:
Empfangen einer Local-Coordinate-System-(LCS-)Information und einer LCS-zu-Global-Coordinate-System-(GCS-)Übersetzungsinformation, wobei die LCS-Information oder/und die LCS-GCS-Übersetzungsinformation über ein Sidelink Positioning Protocol (SLPP) empfangen werden;
Empfangen einer Anforderung (902) zum Erzeugen eines Sidelink-Angle-of-Arrival-(AoA-) Positionsmessberichts;
Durchführen von einer oder mehreren Sidelink-AoA-Messungen (904) von Sidelink-Signalen von einem anderen Endgerät (104);
Erzeugen des Sidelink-AoA-Positionsmessberichts (906) basierend wenigstens teilweise auf der einen oder den mehreren Sidelink-AoA-Messungen; und
Senden des Sidelink-AoA-Positionsmessberichts (906), wobei die eine oder die mehreren Sidelink-AoA-Messungen im AoA-Positionsmessbericht (906) im LCS-Format in Bezug auf ein LCS des Endgeräts (104, 1102) bereitgestellt werden oder die eine oder die mehreren Sidelink-AoA-Messungen im AoA-Positionsmessbericht (906) im GCS-Format basierend auf der empfangenen LCS-zu-GCS-Übersetzungsinformation bereitgestellt werden.

2. Endgerät (104, 1102) nach Anspruch 1, wobei der wenigstens eine Prozessor (1104) zum Veranlassen des Endgeräts (104, 1102), den Sidelink-AoA-Positionsmessbericht an eine Vorrichtung zu senden, von der die Anforderung (902) zum Erzeugen eines Sidelink-AoA-Positionsmessberichts empfangen wird, ausgebildet ist.

3. Endgerät (104, 1102) nach Anspruch 1, wobei die AoA-LCS-zu-GCS-Übersetzungsinformation wenigstens ein Element der Gruppe umfassend Peilwinkel, Antennenneigungswinkel und Schrägenwinkel umfasst.

4. Endgerät (104, 1102) nach Anspruch 1, wobei die eine oder mehreren Sidelink-AoA-Messungen wenigstens einen Azimutwinkel oder wenigstens einen Zenitwinkel umfassen.

5. Endgerät (104, 1102) nach Anspruch 1, wobei das Endgerät (104, 1102) Mitglied einer Gruppe ist, die mit einem Group Local Coordinate System (GLCS) verbunden ist, das als gemeinsame Referenzachsen für Vorrichtungen definiert ist, die Mitglieder der Gruppe sind, und wobei der wenigstens eine Prozessor (1104) ausgebildet ist zum Veranlassen des Endgeräts (104, 1102) zum:
Bestimmen einer weiteren Positionsschätzung des Endgeräts (104, 1102) relativ zum GLCS; und
Melden der weiteren Positionsschätzung des Endgeräts (104, 1102) relativ zum GLCS an eine oder mehrere andere Vorrichtungen, die Mitglieder der Gruppe sind.

6. Von einem Endgerät (104, 1102) ausgeführtes Verfahren, wobei das Verfahren umfasst:
Empfangen einer Local-Coordinate-System-(LCS-)Information und einer LCS-zu-Global-Coordinate-System-(GCS-)Übersetzungsinformation, wobei die LCS-Information oder/und die LCS-GCS-Übersetzungsinformation über ein Sidelink Positioning Protocol (SLPP) empfangen werden;
Empfangen einer Anforderung (902) zum Erzeugen eines Sidelink-Angle-of-Arrival-(AoA-) Positionsmessberichts;
Durchführen von einer oder mehreren Sidelink-AoA-Messungen (904) von Sidelink-Signalen von einem anderen Endgerät (104);
Erzeugen des Sidelink-AoA-Positionsmessberichts (906) basierend wenigstens teilweise auf der einen oder den mehreren Sidelink-AoA-Messungen; und
Senden des Sidelink-AoA-Positionsmessberichts (906), wobei die eine oder die mehreren Sidelink-AoA-Messungen im AoA-Positionsmessbericht (906) im LCS-Format in Bezug auf ein LCS des Endgeräts (104, 1102) bereitgestellt werden oder die eine oder die mehreren Sidelink-AoA-Messungen im AoA-Positionsmessbericht (906) im GCS-Format basierend auf der empfangenen LCS-zu-GCS-Übersetzungsinformation bereitgestellt werden.

7. Prozessor (1104) für ein Endgerät (104, 1102) zur drahtlosen Kommunikation, wobei der Prozessor (1104) ausgebildet ist zum:
Empfangen einer Local-Coordinate-System-(LCS-)Information und einer LCS-zu-Global-Coordinate-System-(GCS-)Übersetzungsinformation, wobei die LCS-Information oder/und die LCS-GCS-Übersetzungsinformation über ein Sidelink Positioning Protocol (SLPP) empfangen werden;
Empfangen einer Anforderung (902) zum Erzeugen eines Sidelink-Angle-of-Arrival-(AoA-) Positionsmessberichts;
Durchführen von einer oder mehreren Sidelink-AoA-Messungen (904) von Sidelink-Signalen von einem anderen Endgerät (104);
Erzeugen des Sidelink-AoA-Positionsmessberichts (906) basierend wenigstens teilweise auf der einen oder den mehreren Sidelink-AoA-Messungen; und
Senden des Sidelink-AoA-Positionsmessberichts (906), wobei die eine oder die mehreren Sidelink-AoA-Messungen im AoA-Positionsmessbericht (906) im LCS-Format in Bezug auf ein LCS des Endgeräts (104, 1102) bereitgestellt werden oder die eine oder die mehreren Sidelink-AoA-Messungen im AoA-Positionsmessbericht (906) im GCS-Format basierend auf der empfangenen LCS-zu-GCS-Übersetzungsinformation bereitgestellt werden.

8. Vorrichtung (102, 1202) zur drahtlosen Kommmunikation, umfassend: wenigstens einen Speicher (1206); und
wenigstens einen Prozessor (1204), gekoppelt mit dem wenigstens einen Speicher (1206) und ausgebildet zum Veranlassen der Vorrichtung (102, 1202) zum:
Senden einer Local-Coordinate-System-(LCS-)Information und einer LCS-zu-Global-Coordinate-System-(GCS-)Übersetzungsinformation an ein Endgerät (104, 1102), wobei die LCS-Information oder/und die LCS-GCS-Übersetzungsinformation über ein Sidelink Positioning Protocol (SLPP) gesendet werden;
Senden einer Anforderung (902) zum Erzeugen eines Sidelink-Angle-of-Arrival-(AoA-)Positionsmessberichts für Sidelink-AoA-Positionsmessungen von Sidelink-Signalen von einem anderen Endgerät (104) an das Endgerät (104, 1102); und
Empfangen eines Sidelink-AoA-Positionsmessberichts (906) für Sidelink-AoA-Positionsmessungen von Sidelink-Signalen von einem anderen Endgerät (104) vom Endgerät (104, 1102), wobei eine oder mehrere Sidelink-AoA-Messungen im AoA-Positionsmessbericht (906) im LCS-Format in Bezug auf ein LCS des Endgeräts (104, 1102) bereitgestellt werden oder die eine oder mehreren Sidelink-AoA-Messungen im AoA-Positionsmessbericht (906) im GCS-Format basierend auf der LCS-zu-GCS-Übersetzungsinformation bereitgestellt werden.

9. Von einer Vorrichtung (102, 1202) ausgeführtes Verfahren, wobei das Verfahren umfasst:
Senden einer Local-Coordinate-System-(LCS-)Information und einer LCS-zu-Global-Coordinate-System-(GCS-)Übersetzungsinformation an ein Endgerät (104, 1102), wobei die LCS-Information oder/und die LCS-GCS-Übersetzungsinformation über ein Sidelink Positioning Protocol (SLPP) gesendet werden;
Senden einer Anforderung (902) zum Erzeugen eines Sidelink-Angle-of-Arrival-(AoA-)Positionsmessberichts für Sidelink-AoA-Positionsmessungen von Sidelink-Signalen von einem anderen Endgerät (104) an das Endgerät (104, 1102); und
Empfangen eines Sidelink-AoA-Positionsmessberichts (906) für Sidelink-AoA-Positionsmessungen von Sidelink-Signalen von einem anderen Endgerät (104) vom Endgerät (104, 1102), wobei eine oder mehrere Sidelink-AoA-Messungen im AoA-Positionsmessbericht (906) im LCS-Format in Bezug auf ein LCS des Endgeräts (104, 1102) bereitgestellt werden oder die eine oder mehreren Sidelink-AoA-Messungen im AoA-Positionsmessbericht (906) im GCS-Format basierend auf der LCS-zu-GCS-Übersetzungsinformation bereitgestellt werden.

## Revendications

1. Équipement utilisateur, UE, (104, 1102) destiné à une communication sans fil, l'UE (104, 1102) comprenant :
au moins une mémoire (1106); et
au moins un processeur (1104) couplé à l'au moins une mémoire (1106) et configuré pour amener l'UE (104, 1102) à :
recevoir des informations de système de coordonnées local, LCS, et des informations de traduction de LCS en système de coordonnées global, GCS, dans lequel au moins l'une des informations LCS ou des informations de traduction de LCS en GCS est reçue via un protocole de positionnement de liaison latérale, SLPP ;
recevoir une demande (902) visant à générer un rapport de mesure de position d'angle d'arrivée, AoA, de liaison latérale ;
effectuer une ou plusieurs mesures AoA de liaison latérale (904) de signaux de liaison latérale provenant d'un autre UE (104);
générer le rapport de mesure de position AoA de liaison latérale (906) sur la base, au moins en partie, de la ou des mesures AoA de liaison latérale ; et
transmettre le rapport de mesure de position AoA de liaison latérale (906), dans lequel la ou les mesures AoA de liaison latérale sont fournies dans le rapport de mesure de position AoA (906) au format LCS par rapport à un LCS de l'UE (104, 1102), ou la ou les mesures de position AoA de liaison latérale sont fournies dans le rapport de mesure de position AoA (906) au format GCS sur la base des informations de traduction de LCS en GCS reçues.

2. UE (104, 1102) de la revendication 1, dans lequel l'au moins un processeur (1104) est configuré pour amener l'UE (104, 1102) à transmettre le rapport de mesure de position AoA de liaison latérale à un appareil à partir duquel la demande (902) visant à générer un rapport de mesure de position AoA de liaison latérale est reçue.

3. UE (104, 1102) de la revendication 1, dans lequel les informations de traduction de LCS en GCS de l'angle d'arrivée, AoA, comprennent un ou plusieurs angles parmi un angle de relèvement, un angle d'inclinaison vers le bas ou un angle oblique.

4. UE (104, 1102) de la revendication 1, dans lequel la ou les mesures AoA de liaison latérale comprennent au moins l'un parmi au moins un angle azimutal ou au moins un angle zénithal.

5. UE (104, 1102) de la revendication 1, dans lequel l'UE (104, 1102) est un membre d'un groupe associé à un système de coordonnées local de groupe, GLCS, défini comme constituant des axes de référence communs pour des dispositifs qui sont membres du groupe, et dans laquelle l'au moins un processeur (1104) est configuré pour amener l'UE (104, 1102) à :
déterminer une estimation de position supplémentaire de l'UE (104, 1102) par rapport au GLCS ; et
rendre compte de l'estimation de position supplémentaire de l'UE (104, 1102) par rapport au GLCS à un ou plusieurs autres dispositifs qui sont membres du groupe.

6. Procédé mis en œuvre par un équipement utilisateur, UE, (104, 1102), le procédé comprenant :
la réception d'informations de système de coordonnées local, LCS, et d'informations de traduction de LCS en système de coordonnées global, GCS, dans lequel au moins l'une des informations LCS ou des informations de traduction de LCS en GCS est reçue via un protocole de positionnement de liaison latérale, SLPP ;
la réception d'une demande (902) visant à générer un rapport de mesure de position d'angle d'arrivée, AoA, de liaison latérale ;
la réalisation d'une ou plusieurs mesures AoA de liaison latérale (904) de signaux de liaison latérale provenant d'un autre UE (104) ;
la génération du rapport de mesure de position AoA de liaison latérale (906) sur la base, au moins en partie, de la ou des mesures AoA de liaison latérale ; et
la transmission du rapport de mesure de position AoA de liaison latérale (906), dans lequel la ou les mesures AoA de liaison latérale sont fournies dans le rapport de mesure de position AoA (906) au format LCS par rapport à un LCS de l'UE (104, 1102), ou la ou les mesures de position AoA de liaison latérale sont fournies dans le rapport de mesure de position AoA (906) au format GCS sur la base des informations de traduction de LCS en GCS reçues.

7. Processeur (1104) pour un équipement utilisateur, UE, (104, 1102) pour une communication sans fil, le processeur (1104) étant configuré pour :
recevoir des informations de système de coordonnées local, LCS, et des informations de traduction de LCS en système de coordonnées global, GCS, dans lequel au moins l'une des informations LCS ou des informations de traduction de LCS en GCS est reçue via un protocole de positionnement de liaison latérale, SLPP ;
recevoir une demande (902) visant à générer un rapport de mesure de position d'angle d'arrivée, AoA, de liaison latérale ;
effectuer une ou plusieurs mesures AoA de liaison latérale (904) de signaux de liaison latérale provenant d'un autre UE (104) ;
générer le rapport de mesure de position AoA de liaison latérale (906) sur la base, au moins en partie, de la ou des mesures AoA de liaison latérale ; et
transmettre le rapport de mesure de position AoA de liaison latérale (906), dans lequel la ou les mesures AoA de liaison latérale sont fournies dans le rapport de mesure de position AoA (906) au format LCS par rapport à un LCS de l'UE (104, 1102), ou la ou les mesures de position AoA de liaison latérale sont fournies dans le rapport de mesure de position AoA (906) au format GCS sur la base des informations de traduction de LCS en GCS reçues.

8. Appareil (102, 1202) pour une communication sans fil, comprenant :
au moins une mémoire (1206) ; et
au moins un processeur (1204) couplé à l'au moins une mémoire (1206) et configuré pour amener l'appareil (102, 1202) à :
transmettre, à un équipement utilisateur, UE, (104, 1102), des informations de système de coordonnées local, LCS, et des informations de traduction de LCS en système de coordonnées global, GCS, dans lequel au moins l'une des informations LCS ou des informations de traduction de LCS en GCS est transmise via un protocole de positionnement de liaison latérale, SLPP ;
transmettre, à l'UE (104, 1102), une demande (902) visant à générer un rapport de mesure de position d'angle d'arrivée, AoA, de liaison latérale pour des mesures de position AoA de liaison latérale de signaux de liaison latérale provenant d'un autre UE (104) ; et
recevoir un rapport de mesure de position AoA de liaison latérale (906) pour des mesures de position AoA de liaison latérale de signaux de liaison latérale d'un autre UE (104), en provenance de l'UE (104, 1102), dans lequel une ou plusieurs mesures AoA de liaison latérale sont fournies dans le rapport de mesure de position AoA (906) au format LCS par rapport à un LCS de l'UE (104, 1102), ou la ou les mesures AoA de liaison latérale sont fournies dans le rapport de mesure de position AoA (906) au format LCS sur la base des informations de traduction de LCS en GCS.

9. Procédé mis en œuvre par un appareil (102, 1202), le procédé comprenant :
la transmission, à un équipement utilisateur, UE, (104, 1102), d'informations de système de coordonnées local, LCS, et d'informations de traduction de LCS en système de coordonnées global, GCS, dans lequel au moins l'une des informations LCS ou des informations de traduction de LCS en GCS est transmise via un protocole de positionnement de liaison latérale, SLPP ;
la transmission, à l'UE (104, 1102), d'une demande (902) visant à générer un rapport de mesure de position d'angle d'arrivée, AoA, de liaison latérale pour des mesures de position AoA de liaison latérale de signaux de liaison latérale provenant d'un autre UE (104) ; et
la réception d'un rapport de mesure de position AoA (906) pour des mesures de position AoA de liaison latérale de signaux de liaison latérale d'un autre UE (104), en provenance de l'UE (104, 1102), dans lequel une ou plusieurs mesures AoA de liaison latérale sont fournies dans le rapport de mesure de position AoA (906) au format LCS par rapport à un LCS de l'UE (104, 1102), ou la ou les mesures AoA de liaison latérale sont fournies dans le rapport de mesure de position AoA (906) au format LCS sur la base des informations de traduction de LCS en GCS.
